# DEMANDE DE BREVET EUROPEEN

(11) **EP 4 195 656 A1**
(43) Date de publication de la demande: **14.06.2023**
(21) Numéro de dépôt: 22212926.4
(22) Date de dépôt: 12.12.2022
(51) Int. Cl.: H04N 5/46, H04N 5/50, H04N 5/455, H04N 21/426, H04N 21/438, H04N 21/61, G06F 3/14

(54) **DISPOSITIF D'ACQUISITION DE SIGNAUX VIDÉO**

(30) Priorité: 13.12.2021 FR 2113406
(71) Demandeur: ATEME, 78140 Velizy Villacoublay (FR)
(72) Inventeur: CAPITAN, Jean-Michel, 91430 VAUHALLAN (FR)
(74) Mandataire: Plasseraud IP

(57) **Abrégé**

Un dispositif d'acquisition de signaux de diffusion vidéo modulés analogiquement est proposé, qui comprend, regroupés sur une carte d'extension pour serveur informatique, une pluralité de N voies d'acquisition, chacune des N voies d'acquisition produisant un flux de transport vidéo respectif fourni en entrée d'un module de virtualisation multi-canaux délivrant des trames portant des données d'un flux de transport vidéo respectif parmi les N flux de transports vidéo respectifs, dans lequel chacune des N voies d'acquisition comprend : une interface d'entrée alimentée par un bloc d'alimentation faible bruit agencée pour recevoir un signal de diffusion vidéo modulé d'entrée respectif dans une bande de fréquences d'entrée ; un amplificateur répartiteur radiofréquences faible bruit à entrée simple et double sorties agencé pour, sur la base du signal de diffusion vidéo modulé d'entrée respectif, produire un premier et un deuxième signal d'entrée amplifié dans la bande de fréquences d'entrée, dans lequel le premier signal d'entrée amplifié est dans une bande de fréquences de diffusion par satellite, et le deuxième signal d'entrée amplifié est dans une bande de fréquences de diffusion par câble et/ou terrestre ; un premier tuner configuré pour recevoir le premier signal d'entrée amplifié et le transposer en fréquence depuis la bande de fréquences de diffusion par satellite pour générer un premier signal en bande de base ; un deuxième tuner configuré pour recevoir le deuxième signal d'entrée amplifié et le transposer en fréquence depuis la bande de fréquences de diffusion terrestre et/ou par câble pour générer un deuxième signal en bande de base ; et un démodulateur configuré pour recevoir en entrée les premier et deuxième signaux en bande de base, et générer sur la base des premier et deuxième signaux en bande de base, le flux de transport vidéo respectif.

## Description

### Domaine technique

La présente divulgation se rapporte à un dispositif d'acquisition de signaux vidéo. Elle s'applique notamment aux dispositifs d'acquisitions de signaux de diffusion vidéo modulés.

### Technique antérieure

Les cartes d'acquisition vidéo disponibles sur le marché, tant grand public que professionnel, sont limitées à certains types de transmission de signaux vidéo : transmission par câble, par voie terrestre ou bien par satellite. Ces cartes sont ainsi en général conçues pour l'acquisition d'un ou plusieurs canaux vidéo de type DVB-S ou S2, d'un ou plusieurs canaux vidéo de type DVB-T ou T2, ou bien d'un ou plusieurs canaux vidéo de type DVB-C ou C2.

### Problème technique

Les spécificités des cartes existantes nécessitent d'utiliser plusieurs cartes correspondant respectivement à plusieurs types de transmission vidéo au sein d'un même serveur informatique, chaque carte occupant un port d'extension différent au sein du serveur. Le nombre de ports d'extension du serveur devient alors une contrainte qui restreint les possibilités de configuration des serveurs informatiques embarquant des cartes d'acquisition vidéo. Cette situation conduit en effet à des configurations matérielles peu flexibles, du fait même de la nécessité de prendre en compte les spécificités de la carte d'acquisition utilisée sur chaque port d'extension disponible au sein du serveur informatique.

Un objet de la présente invention est de remédier au moins partiellement aux inconvénients précités.

Selon un premier aspect, il est proposé un dispositif d'acquisition de signaux de diffusion vidéo modulés analogiquement, le dispositif comprenant, regroupés sur une carte d'extension pour serveur informatique, un contrôleur, une pluralité de N voies d'acquisition, chacune des N voies d'acquisition produisant un flux de transport vidéo respectif fourni en entrée d'un module de virtualisation multi-canaux délivrant des trames portant des données d'un flux de transport vidéo respectif parmi les N flux de transports vidéo respectifs, dans lequel chacune des N voies d'acquisition comprend : une interface d'entrée alimentée par un bloc d'alimentation faible bruit agencée pour recevoir un signal de diffusion vidéo modulé d'entrée respectif dans une bande de fréquences d'entrée ; un amplificateur répartiteur radiofréquences faible bruit à entrée simple et double sorties agencé pour, sur la base du signal de diffusion vidéo modulé d'entrée respectif, produire un premier et un deuxième signal d'entrée amplifié dans la bande de fréquences d'entrée, dans lequel le premier signal d'entrée amplifié est dans une bande de fréquences de diffusion par satellite, et le deuxième signal d'entrée amplifié est dans une bande de fréquences de diffusion par câble et/ou terrestre ; un premier tuner configuré pour recevoir le premier signal d'entrée amplifié et le transposer en fréquence depuis la bande de fréquences de diffusion par satellite pour générer un premier signal en bande de base ; un deuxième tuner configuré pour recevoir le deuxième signal d'entrée amplifié et le transposer en fréquence depuis la bande de fréquences de diffusion terrestre et/ou par câble pour générer un deuxième signal en bande de base ; et un démodulateur configuré pour recevoir en entrée le premier ou le deuxième signal en bande de base, et générer sur la base dudit signal en bande de base, le flux de transport vidéo respectif.

Le dispositif proposé étant mis en œuvre sur une seule carte électronique d'extension pour serveur informatique, il n'occupe avantageusement qu'un seul port d'extension au sein d'un serveur informatique. Ainsi, le dispositif proposé permet avantageusement, par configuration de chacune des N voies d'acquisition pour l'acquisition de signaux de diffusion vidéo par câble, par voie terrestre, ou par satellite, la mise en œuvre sur une même carte électronique au format d'une carte d'extension pour serveur informatique d'un dispositif d'acquisition vidéo multi-canaux et multistandards. Une mode de réalisation du dispositif proposé permet ainsi par exemple d'obtenir une carte multicanaux permettant l'acquisition sur une voie de signaux de diffusion vidéo de type DVB-T/T2, sur une autre voie de signaux de diffusion vidéo de type DVB-C/C2, et sur une autre voie de signaux de diffusion vidéo de type DVB-S/S2, le tout dans un format de carte d'extension pour serveur informatique, par exemple au format PCI-Express (PCI-E) très largement répandu.

Un autre avantage du dispositif proposé tient ainsi au fait qu'il permet la mise en œuvre sur une carte d'acquisition vidéo multi-canaux d'un module de virtualisation multi-canaux en tirant pleinement parti des avantages de la virtualisation de canaux vidéo pour produire en sortie sur le bus du port d'extension auquel le dispositif est connecté, à partir d'une pluralité de flux de transport vidéo respectifs, des trames de données vidéo correspondantes.

Les caractéristiques exposées dans les paragraphes suivants peuvent, optionnellement, être mises en œuvre. Elles peuvent être mises en œuvre indépendamment les unes des autres ou en combinaison les unes avec les autres :

Dans un ou plusieurs modes de réalisation, l'interface d'entrée pourra être coaxiale, afin de pouvoir avantageusement connecter au dispositif un câble de réception de signaux vidéo diffusés par satellite.

Dans un ou plusieurs modes de réalisation, la carte d'extension pour serveur informatique est au format PCIe bas profil, de manière à avantageusement pouvoir utiliser le dispositif proposé au sein d'un serveur informatique ou d'un ordinateur personnel, équipé d'un ou plusieurs ports d'extension PCIe.

Dans un ou plusieurs modes de réalisation, la bande de fréquences d'entrée couvre les bandes de fréquences de diffusion vidéo par câble, terrestre et par satellite. Le dispositif proposé est ainsi avantageusement un dispositif d'acquisition capable d'acquérir des signaux sur une très large bande de fréquences correspondant à la juxtaposition de bandes de fréquences utilisées pour différentes technologies de diffusion vidéo.

Par exemple, dans un ou plusieurs modes de réalisation la bande de fréquences de diffusion par câble couvre les bandes de fréquences DVB-C et DVB-C2, la bande de fréquences de diffusion terrestre couvre les bandes de fréquences DVB-T et DVB-T2, et la bande de fréquences de diffusion par satellite couvre les bandes de fréquences DVB-S, DVB-S2 et DVB-S2X. Le dispositif proposé est ainsi avantageusement un dispositif d'acquisition multistandards DVB.

Dans un ou plusieurs modes de réalisation, l'amplificateur répartiteur radiofréquences faible bruit est à entrée simple différentielle et à double sorties différentielles, l'interface d'entrée comprend un point chaud et une masse, et le point chaud de l'interface d'entrée est couplé électriquement à l'entrée plus de l'amplificateur répartiteur, et l'entrée moins de l'amplificateur répartiteur est couplée à la masse de l'interface d'entrée.

Dans un ou plusieurs modes de réalisation, les premier et deuxième tuners sont à entrée différentielle, et une première sortie différentielle de l'amplificateur est couplée à l'entrée différentielle du premier tuner, et une deuxième sortie différentielle de l'amplificateur est couplée à l'entrée différentielle du deuxième tuner.

Dans un ou plusieurs modes de réalisation, le premier tuner est à entrée simple et double sorties I/Q vers le démodulateur.

Dans un ou plusieurs modes de réalisation, le premier, le deuxième tuner et l'amplificateur répartiteur sont chacun recouverts d'un blindage radiofréquences de manière à avantageusement protéger ces composants des perturbations électromagnétiques qui seraient autrement générées par des composants numériques ou d'alimentation.

Dans un ou plusieurs modes de réalisation, une ou plusieurs de la pluralité de N voies d'acquisition comprend un premier tuner double comprenant deux tuners chacun du type du premier tuner, un deuxième tuner double comprenant deux tuners chacun du type du deuxième tuner, et un démodulateur double comprenant deux démodulateur du type du démodulateur et configuré pour recevoir en entrée les premier et deuxième signaux en bande de base, et générer sur la base des premier et deuxième signaux en bande de base un double flux de transport vidéo respectif fourni en entrée du module de virtualisation multi-canaux. Dans un ou plusieurs modes de réalisation, chacune de la pluralité de N voies d'acquisition comprend un démodulateur double configuré pour recevoir en entrée les premier et deuxième signaux en bande de base, et générer sur la base des premier et deuxième signaux en bande de base un double flux de transport vidéo respectif fourni en entrée du module de virtualisation multi-canaux.

Dans un ou plusieurs modes de réalisation, le dispositif proposé comprend 4 voies d'acquisition, chacune comprenant un premier tuner double respectif, un deuxième tuner double respectif, et un démodulateur double respectif, et est ainsi configuré pour fournir au plus 8 flux de transports vidéo au module de virtualisation multi-canaux. Dans ces modes de réalisation, le dispositif proposé fournit avantageusement une carte électronique, au format d'une carte d'extension pour serveur informatique (par exemple une carte au format PCIe bas profil), permettant l'acquisition en parallèle de 8 signaux de diffusion vidéo, chacun des 8 signaux vidéo de diffusion pouvant être de type DVB-T/T2, de type DVB-C/C2 ou de type DVB-S/S2.

### Brève description des dessins

D'autres particularités et avantages de la présente invention apparaîtront dans la description ci-après d'exemples de réalisation non limitatifs, en référence aux dessins annexés, dans lesquels :
**Fig. 1**

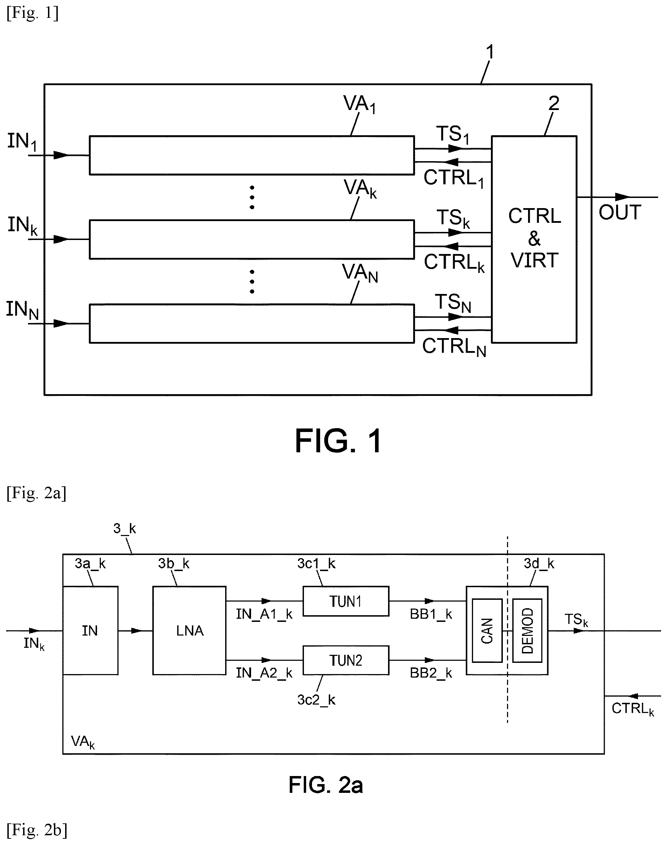

   [Fig. 1] est un schéma illustrant un exemple de dispositif d'acquisition de signaux vidéo selon un ou plusieurs modes de réalisation ;
**Fig. 2a**
   [Fig. 2a] est un schéma illustrant un exemple de voie d'acquisition selon un ou plusieurs modes de réalisation ;
**Fig. 2b**

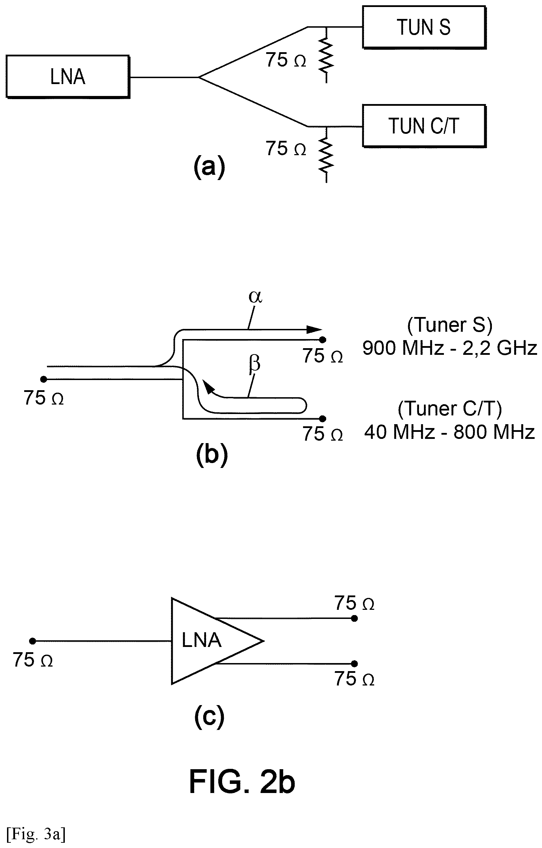

   [Fig. 2b] est un est un ensemble de schémas illustrant des exemples de configuration de couplage amplificateur - démodulateur, le schéma (c) illustrant un exemple d'amplificateur faible bruit selon un ou plusieurs modes de réalisation ;
**Fig. 3a**

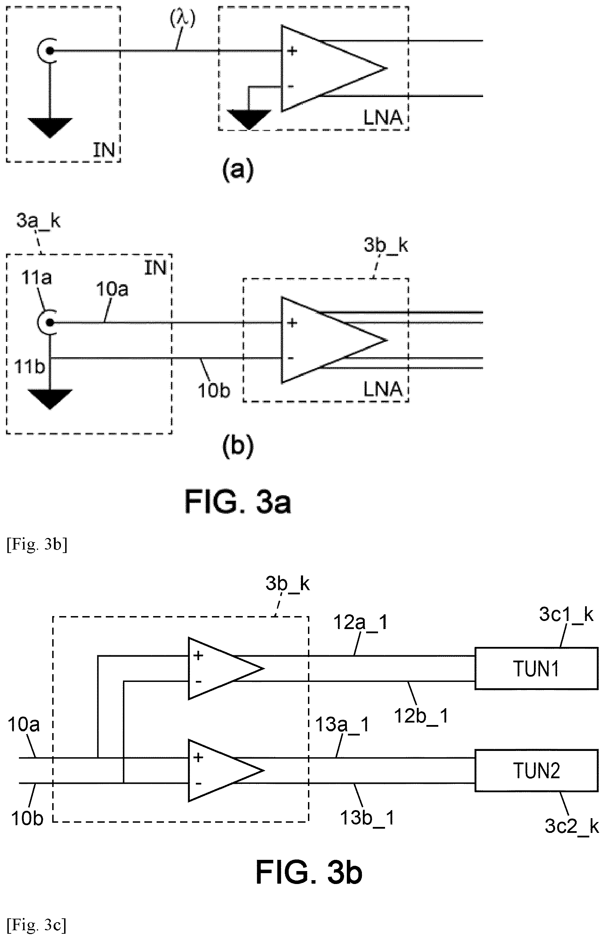

   [Fig. 3a] est un schéma illustrant une partie d'un exemple de voie d'acquisition selon un ou plusieurs modes de réalisation ;
**Fig. 3b**
   [Fig. 3b] est un schéma illustrant une partie d'un exemple de voie d'acquisition selon un ou plusieurs modes de réalisation ;
**Fig. 3c**

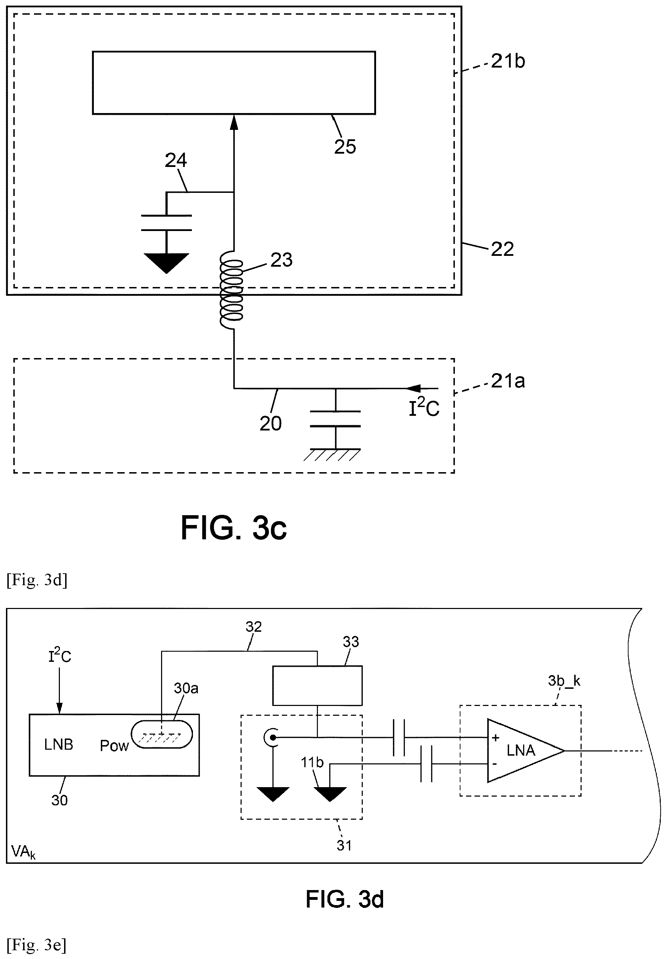

   [Fig. 3c] est un schéma illustrant une partie d'un exemple de voie d'acquisition selon un ou plusieurs modes de réalisation ;
**Fig. 3d**
   [Fig. 3d] est un schéma illustrant une partie d'un exemple de voie d'acquisition ;
**Fig. 3e**

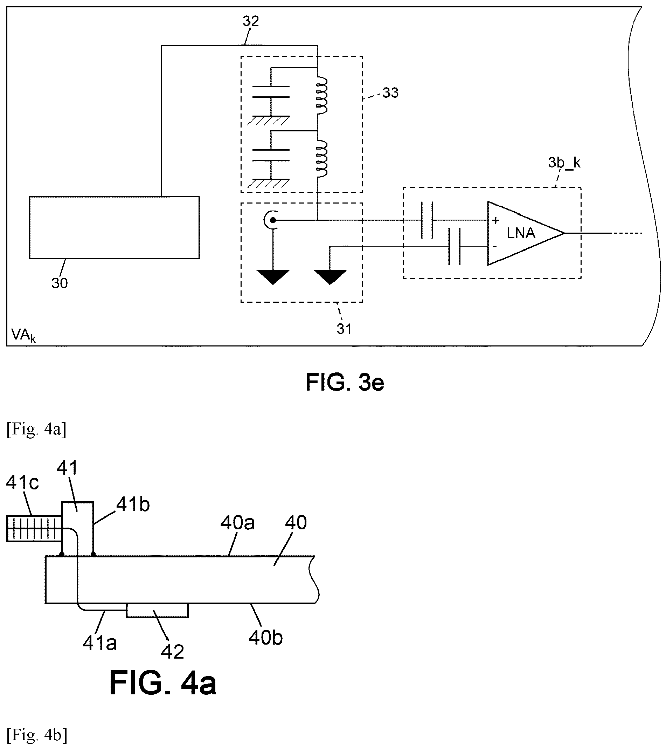

   [Fig. 3e] est un schéma illustrant une partie d'un exemple de voie d'acquisition selon un ou plusieurs modes de réalisation ;
**Fig. 4a**
   [Fig. 4a] est un schéma illustrant une partie d'un exemple de voie d'acquisition selon un ou plusieurs modes de réalisation ;
**Fig. 4b**

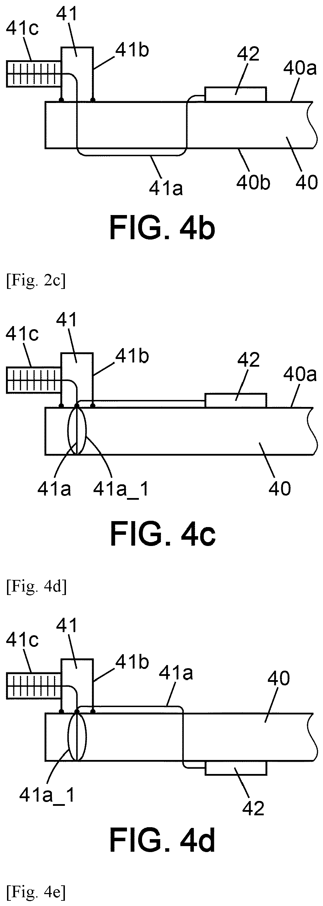

   [Fig. 4b] est un schéma illustrant une partie d'un exemple de voie d'acquisition ;
**Fig. 4c**
   [Fig. 4c] est un schéma illustrant une partie d'un exemple de voie d'acquisition ;
**Fig. 4d**
   [Fig. 4d] est un schéma illustrant une partie d'un exemple de voie d'acquisition ;
**Fig. 4e**

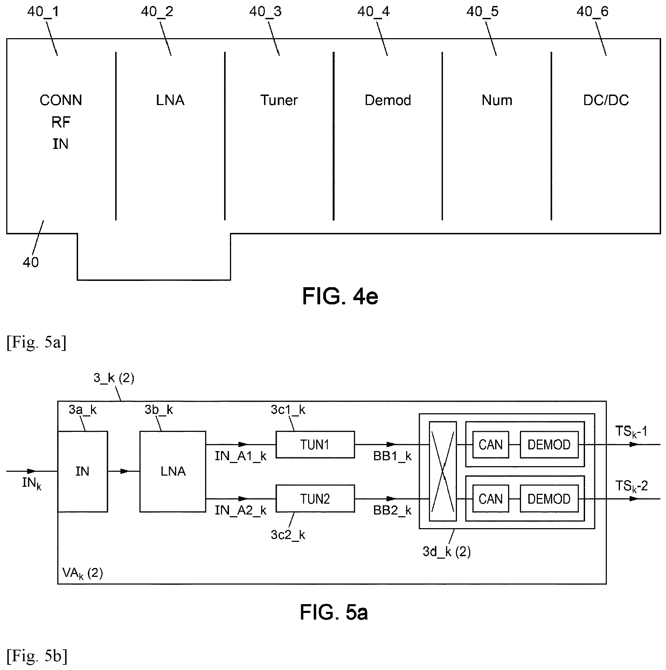

   [Fig. 4e] est un schéma illustrant un dispositif d'acquisition selon un ou plusieurs modes de réalisation ;
**Fig. 5a**
   [Fig. 5a] est un schéma illustrant un exemple de voie d'acquisition selon un ou plusieurs modes de réalisation ;
**Fig. 5b**

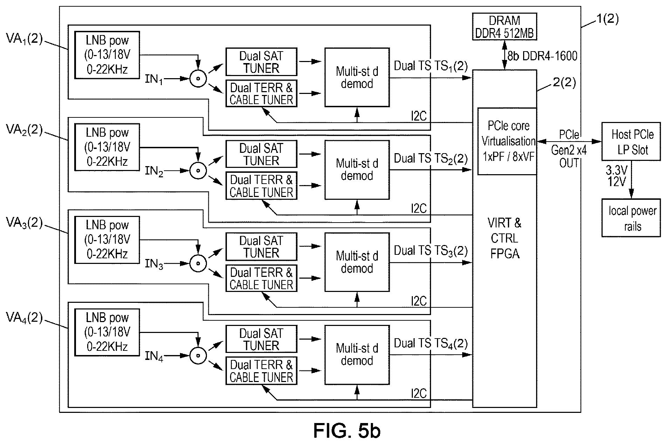

   [Fig. 5b] est un schéma illustrant un exemple de dispositif d'acquisition de signaux vidéo selon un ou plusieurs modes de réalisation.

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description.

La présente demande fait référence à des fonctions, moteurs, unités, modules, plateformes, et illustrations de diagrammes des méthodes et dispositifs selon un ou plusieurs modes de réalisation. Sauf mention contraire dans les présentes, chacun des fonctions, moteurs, modules, plateformes, unités et diagrammes décrits peut être mis en œuvre sous forme matérielle, logicielle (y compris sous forme de logiciel embarqué («firmware»), ou de «middleware»), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en œuvre de ces fonctions.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Les expressions « sous-ensemble analogique », « sous-ensemble radiofréquences », « sous-ensemble analogique/radiofréquences », « partie analogique », « partie radiofréquences », « chaine radiofréquences » et « chaine RF », sont utilisées de manière indifférenciée dans la présente description pour désigner des sous-ensembles d'un ou de plusieurs composants électroniques (qui sont alors dits « analogiques ») configurés pour traiter des signaux analogiques (comme par exemple des signaux radiofréquences analogiques, auquel cas les composants analogiques peuvent être dits « radiofréquences »)). Les expressions « sous-ensemble numérique » et « partie numérique » sont utilisées de manière indifférenciée dans la présente description pour désigner des sous-ensembles comprenant un ou plusieurs composants électroniques (qui sont alors dits « numériques ») configurés pour traiter des signaux numériques. Les expressions « sous-ensemble alimentation » et « partie alimentation » sont utilisées de manière indifférenciée dans la présente description pour désigner des sous-ensembles d'alimentation électrique comprenant un ou plusieurs composants électroniques (qui sont alors dits « d'alimentation électrique ») d'alimentation électrique.

Les termes «couplé de manière opérationnelle», «couplé», «connecté» et leurs variantes et formes diverses utilisés dans les présentes font référence à des couplages et connexions physiques, électriques, électroniques ou mécaniques, qui peuvent être directs ou indirects, et comprennent notamment des connexions entre composants électroniques (par exemple sous forme de piste de cuivre), entre des équipements électroniques ou entre des portions de tels équipements qui permettent des opérations et fonctionnements tels que décrits dans la présente demande.

La Fig. 1 illustre un exemple de dispositif d'acquisition de signaux vidéo selon un ou plusieurs modes de réalisation.

Le dispositif 1 de la Fig. 1 comprend N voies d'acquisition VA₁ ... VA_{N}. Chacune des N voies d'acquisition VAₖ produit un flux de transport vidéo TSᵢ fourni en entrée d'un module 2 de virtualisation multi-canaux. Dans un ou plusieurs modes de réalisation, le dispositif 1 comprend N = 4 voies d'acquisition VA₁, VA₂, VA₃ et VA₄.

Dans un ou plusieurs modes de réalisation, les N voies d'acquisition VAₖ du dispositif 1 et le module 2 de virtualisation multi-canaux sont implantés sur une carte d'extension, par exemple pour serveur informatique, ce qui a l'avantage de permettre d'insérer le dispositif 1 dans tout dispositif informatique disposant d'un slot d'extension au format correspondant, comme par exemple un ordinateur personnel, un serveur informatique, etc.

En fonction du mode de réalisation, la carte d'extension pourra être au format PCI (de l'anglais « Peripheral Component Interconnect »), PCIe (de l'anglais « PCI Express »), SATA (de l'anglais « Serial Advanced Technology Attachment »), CXL (de l'anglais « Compute Express Link »), ou à tout autre format de carte d'extension, par exemple pour serveur informatique. La fourniture d'un dispositif d'acquisition de signaux de diffusion vidéo modulés au format d'une carte d'extension de type PCIe permet de tirer avantage de la très large utilisation de ce format pour des cartes d'extension dans tous types de dispositif informatique. Dans ce qui suit, on considère l'exemple non limitatif d'un dispositif d'acquisition mis en œuvre sur une carte d'extension au format PCIe bas profil. Néanmoins, l'homme du métier pourra se rendre compte que le dispositif proposé n'est pas limité à un format de carte d'extension particulier, et que tout format de carte d'extension pour serveur informatique pourra être utilisé dans le cadre de modes de réalisation du dispositif proposé.

Cependant, du fait de sa petite taille, le format PCIe bas profil (en anglais « PCIe low profile ») choisi pour cette réalisation nécessite de placer les composants de chacune des voies d'acquisition VAₖ à proximité les uns des autres, ce qui provoque des perturbations électro-magnétiques qu'il convient de traiter pour obtenir un niveau de performances souhaitable pour une carte d'acquisition vidéo de qualité professionnelle.

En référence à la Fig. 1, chaque voie d'acquisition VAₖ comprend une unité d'interface d'entrée configurée pour recevoir un signal vidéo d'entrée respectif INₖ. La voie d'acquisition VAₖ est configurée pour réaliser un traitement du signal vidéo d'entrée INₖ reçu, et pour générer en sortie un flux vidéo démodulé appelé flux de transport vidéo (en anglais, « Transport Stream », ou « TS ») respectif TSₖ, et le fournir en entrée du module 2 de virtualisation multi-canaux.

Dans un ou plusieurs modes de réalisation, le module 2 de virtualisation multi-canaux peut être mis en œuvre au sein d'un composant, par exemple de type FPGA, qui comprendra en outre un module de contrôle du dispositif proposé, et un module de pilotage de voie d'acquisition configuré pour configurer et/ou commander une ou plusieurs voies d'acquisition VAₖ, par exemple par le biais d'un signal de commande CTRLₖ. En fonction du mode de réalisation, les module de virtualisation multi-canaux, module de contrôle et module de pilotage pourront être mis en œuvre au sein d'un ou de plusieurs composants électroniques du dispositif proposé, et pourront être mis en œuvre (séparément ou conjointement) sous forme logicielle, sous forme matérielle, comme un circuit de type ASIC, ou sous forme d'une combinaison d'éléments matériels et logiciels, comme par exemple un programme logiciel destiné à être chargé et exécuté sur un composant de type FPGA. Le module de contrôle sera typiquement configuré pour piloter les opérations des autres modules du dispositif proposé, et pourra être, en fonction du mode de réalisation, un composant ou une partie d'un composant implémentant un ou plusieurs processeurs ou une unité de calcul, couplé de manière opérationnelle à une mémoire, pour le contrôle des opérations du dispositif proposé, et notamment le contrôle du module de virtualisation et du module de pilotage des voies d'acquisition.

Dans un ou plusieurs modes de réalisation, le module 2 de virtualisation multi-canaux peut être configuré pour générer en sortie, à partir de N flux de transport vidéo reçus en entrée, un flux de trames OUT, chacune portant des données d'un flux de transport vidéo parmi les N flux de transport vidéo fournis en entrée du module 2 de virtualisation multi-canaux. En fonction du mode de réalisation, le format des trames correspondra de préférence au format de la carte d'extension sur laquelle le dispositif d'acquisition vidéo 1 est implanté.

Par exemple, le flux de sortie OUT pourra comprendre des trames de protocole correspondant au format choisi pour la carte d'extension (par exemple, PCI, PCIe, SATA, CXL). Dans le mode de réalisation préféré dans lequel le dispositif d'acquisition vidéo 1 est implanté sur une carte d'extension au format PCIe, le module 2 de virtualisation multi-canaux sera configuré pour délivrer en sortie sur un bus PCIe, par exemple d'un serveur informatique, un flux de trames de protocole PCIe, chacune portant des données d'un flux de transport vidéo TSₖ parmi les N flux de transport vidéo (TSₖ)_{k=1,...,N} fournis en entrée du module 2 de virtualisation multicanaux.

Dans un ou plusieurs modes de réalisation, le circuit imprimé de la carte électronique du dispositif 1 peut être configuré avec un plan de masse comprenant une masse analogique et une masse numérique (parfois aussi appelée masse mécanique) distinctes l'une de l'autre. Sur les figures, une masse numérique est représentée par un symbole râteau, tandis qu'une masse analogique est représentée par une flèche pointant vers le bas. Les masses numériques sont des masses prévues pour recevoir des signaux bruités (par exemple par du bruit de commutation numérique), tandis que les masses analogiques sont, au contraire des masses numériques, prévues pour être isolées de ces signaux bruités.

La Fig. 2a illustre un exemple de voie d'acquisition selon un ou plusieurs modes de réalisation, par exemple utilisable pour une ou plusieurs des voies d'acquisition VAₖ d'un dispositif d'acquisition vidéo de type illustré sur la Fig. 1.

La voie d'acquisition 3_k VAₖ de la Fig. 2a comprend une interface d'entrée (IN) 3a_k, un amplificateur répartiteur radiofréquences faible bruit (LNA) 3b_k, un premier tuner (TUN1) 3c1_k, un deuxième tuner (TUN2) 3c2_k, et un démodulateur (CAN/DEMOD) 3d_k.

L'interface d'entrée 3a_k est agencée pour recevoir un signal de diffusion vidéo modulé d'entrée INₖ dans une bande de fréquences d'entrée F_INₖ.

Dans un ou plusieurs modes de réalisation, l'interface d'entrée 3a_k sera avantageusement configurée pour recevoir des signaux sur une large bande de fréquences couvrant différentes bandes de fréquence de diffusion vidéo. Par exemple, l'interface d'entrée 3a_k pourra être configurée pour recevoir des signaux sur une large bande de fréquences d'entrée F_INₖ couvrant la bande de fréquences de diffusion vidéo par câble, la bande de fréquences de diffusion vidéo terrestre et la bande de fréquences de diffusion vidéo par satellite.

Dans un ou plusieurs modes de réalisation, la bande de fréquences de diffusion vidéo par câble utilisée pourra couvrir les bandes de fréquences DVB-C (de l'anglais « Digital Video Broadcasting - Cable ») et DVB-C2 (de l'anglais « Digital Video Broadcasting - Cable 2 » ou « Digital Video Broadcasting - Second Generation Cable ») (normes DVB (de l'anglais « Digital Video Broadcasting ») pour les transmissions par câble, dans une bande de radiofréquences comprise entre 40 MHz et 400 MHz environ), la bande de fréquences de diffusion vidéo terrestre pourra couvrir les bandes de fréquences DVB-T (de l'anglais «Digital Video Broadcasting - Terrestrial ») et DVB-T2 (de l'anglais «Digital Video Broadcasting - Terrestrial 2 » ou « Digital Video Broadcasting - Second Generation Terrestrial ») (normes DVB pour les transmissions terrestres, dans une bande de radiofréquences comprise entre 400 MHz et 800 MHz environ), et la bande de fréquences de diffusion vidéo par satellite utilisée pourra couvrir les bandes de fréquences DVB-S (de l'anglais « Digital Video Broadcasting - Satellite »), DVB-S2 (de l'anglais « Digital Video Broadcasting - Satellite 2 » ou « Digital Video Broadcasting - Second Generation Satellite ») et DVB-S2X (de l'anglais «Digital Video Broadcasting - Second Generation Satellite Extension ») (normes DVB pour les transmissions par satellite, dans une bande de radiofréquences comprise entre 900 MHz et 2,2 GHz environ). La voie d'acquisition 3_k pourra ainsi avantageusement être configurée pour recevoir en entrée des signaux correspondants à des normes de diffusion vidéo différentes dans des bandes de fréquences correspondantes.

A nouveau en référence à la Fig. 1, le dispositif d'acquisition vidéo 1 comportant une ou plusieurs voies d'acquisition du type de celle illustrée sur la Fig. 2a sera ainsi avantageusement un dispositif d'acquisition vidéo multi-bandes, auquel il sera possible de connecter, au choix de l'utilisateur, un support de signal de diffusion vidéo par câble, par voie terrestre, ou par satellite. Le signal d'entrée INₖ que le dispositif proposé sera apte à acquérir pourra ainsi être un signal analogique large bande transportant un signal radio-fréquences dans la bande de fréquences de diffusion par satellite, un signal radio-fréquences dans la bande de fréquences de diffusion terrestre et/ou un signal radio-fréquences dans la bande de fréquences de diffusion par câble.

Dans un ou plusieurs modes de réalisation, le dispositif proposé pourra compter N = 4 voies d'acquisition du type de celle illustrée sur la Fig. 2a et décrite ci-après. Chacune des 4 voies d'acquisition du dispositif proposé sera ainsi configurée pour produire un flux de transport vidéo respectif, de sorte que le dispositif pourra fournir 4 flux de transports vidéo en entrée du module de virtualisation.

En référence à la Fig. 2a illustrant une voie d'acquisition VAₖ, le signal INₖ reçu sur l'interface d'entrée IN 3a_k est fourni à un amplificateur LNA 3b_k répartiteur radio fréquences faible bruit à entrée simple et à double sorties IN_A1_k et IN_A2_k différentielles. Dans un ou plusieurs modes de réalisation, l'amplificateur 3b_k sera configuré pour produire, à partir du signal de diffusion vidéo modulé d'entrée INₖ reçu sur l'interface d'entrée 3a_k, un premier signal d'entrée IN_A1_k amplifié dans une bande de fréquences de diffusion par satellite, et un deuxième signal d'entrée IN_A2_k amplifié dans une bande de fréquences de diffusion par câble et/ou terrestre. Le chemin des signaux de diffusion par satellite, opérant dans une bande de fréquences élevée, et celui des signaux de diffusion par câble ou terrestre, opérant dans une bande de fréquences moins élevée en comparaison, seront donc séparés par le biais de l'amplificateur 3b_k, de manière à fournir les signaux de diffusion par satellite et les signaux de diffusion par câble ou terrestre respectivement à des premier et deuxième tuners TUN1 3c1_k et TUN2 3c2_k opérant sur des signaux dans des bandes de fréquences correspondantes.

Dans un ou plusieurs modes de réalisation, le premier tuner 3c1_k sera configuré pour recevoir le premier signal d'entrée amplifié IN_A1_k et le transposer en fréquence depuis la bande de fréquences de diffusion par satellite pour générer un premier signal en bande de base BB1_k, et le deuxième tuner 3c2_k sera configuré pour recevoir le deuxième signal d'entrée amplifié IN_A2_k et le transposer en fréquence depuis la bande de fréquences de diffusion par câble et/ou terrestre pour générer un deuxième signal en bande de base BB2_k.

Dans un ou plusieurs modes de réalisation, un convertisseur-démodulateur CAN/DEMOD 3d_k sera configuré pour recevoir en entrée, en fonction du signal d'entrée fourni à la voie d'acquisition VAk, le premier signal en bande de base BB1_k ou deuxième signal en bande de base BB2_k et générer, sur la base du signal en bande de base (BB1_k ou BB2_k), un flux de transport vidéo TSₖ. Le convertisseur-démodulateur 3d_k pourra typiquement comprendre un convertisseur analogique-numérique couplé à un démodulateur numérique configuré pour démoduler le signal numérique produit par le convertisseur CAN à partir du signal analogique BB1_k ou BB2_k reçu en entrée.

Ainsi, dans le cas où l'interface d'entrée 3a_k est connectée à une source de signal de diffusion vidéo par satellite d'entrée INₖ, ce signal est amplifié par l'amplificateur 3b_k pour générer un signal de diffusion vidéo par satellite d'entrée amplifié IN_A1_k. Le signal de diffusion vidéo par satellite d'entrée amplifié IN_A1_k est transposé en fréquence par le tuner TUN1 3c1_k pour générer un signal en bande de base BB1_k, qui est fourni en entrée du convertisseur-démodulateur 3d_k, où il est démodulé pour produire le flux de transport vidéo TSk. Dans le cas où l'interface d'entrée 3a_k est connectée à une source de signal de diffusion vidéo par câble ou terrestre d'entrée INₖ, ce signal est amplifié par l'amplificateur 3b_k pour générer un signal de diffusion vidéo par câble ou terrestre d'entrée amplifié IN_A2_k. Le signal de diffusion vidéo par câble ou terrestre d'entrée amplifié IN_A2_k est transposé en fréquence par le tuner TUN2 3c2_k pour générer un signal en bande de base BB2_k, qui est fourni en entrée du convertisseur-démodulateur 3d_k, où il est démodulé pour produire le flux de transport vidéo TSₖ.

Comme illustré sur la Fig. 2a, les circuits de traitement interface d'entrée 3a_k, amplificateur 3b_k, premier et deuxième tuners 3c1_k et 3c2_k et convertisseur analogique - numérique dans le convertisseur-démodulateur 3d_k traitent des signaux analogiques, tandis que le démodulateur du convertisseur-démodulateur 3d_k, ou, en référence à la Fig. 1, des composants du module 2 de virtualisation multi-canaux, comme par exemple des composants mémoire, tels que des composants DDR SDRAM (de l'anglais « Double Data Rate Synchronous Dynamic Random Access Memory ») traitent des signaux numériques et des signaux d'alimentation. La voie d'acquisition 3_k comprend donc des composants analogiques qui forment un « environnement analogique » (qui peut être vu comme une partie analogique) de la voie, tandis que le démodulateur du convertisseur-démodulateur 3d_k, ainsi que d'autres composants numériques et/ou d'alimentation de l'environnement extérieur à la voie d'acquisition 3_k forment un « environnement numérique/alimentation » (qui peut être vu comme une partie numérique/alimentation comprenant une partie numérique et/ou une partie alimentation) de la voie d'acquisition, qui est susceptible de générer du bruit électromagnétique venant perturber le fonctionnement de la partie analogique de la voie d'acquisition.

Du fait de la proximité d'implémentation des composants sur une même carte électronique, les composants traitant des signaux numériques, comme le démodulateur du convertisseur-démodulateur 3d_k, ou (en référence à la Fig. 1) des composants du module 2 de virtualisation multi-canaux, sont susceptibles de générer des signaux parasites venant (potentiellement fortement) perturber le fonctionnement des composants traitant des signaux analogiques, entrainant des pertes de performances affectant l'ensemble du dispositif d'acquisition vidéo, en particulier lorsque tous les composants du dispositif d'acquisition proposés sont regroupés sur une carte électronique de petites dimensions, comme par exemple une carte au format PCIe bas profil. Le choix d'une carte de petites dimensions conduit à une densité importante de composants électroniques sur la carte, parmi lesquels des sous-ensembles de composants traitant des signaux analogiques (notamment des signaux radiofréquences) (partie analogique de la carte), des sous-ensembles de composants d'alimentation électrique (partie alimentation de l'environnement de la carte comprenant la carte et son environnement extérieur (par exemple l'alimentation électrique d'un serveur dans lequel la carte est insérée), et des sous-ensembles de composants traitant des signaux numériques (partie numérique de la carte).

De même, lorsque le dispositif proposé est inséré, par exemple sous forme de carte d'extension, à l'intérieur du boîtier d'un serveur informatique ou d'un ordinateur personnel, les composants du serveur informatique ou, selon les cas, de l'ordinateur personnel, qui typiquement traitent des signaux numériques ou des signaux d'alimentation électrique, sont susceptibles de générer des signaux parasites venant fortement perturber le bon fonctionnement des composants traitant des signaux analogiques, entrainant des pertes locales de performances affectant l'ensemble des performances du dispositif d'acquisition vidéo.

Les composants traitant des signaux numériques entourant les composants du dispositif qui traitent des signaux analogiques vont par exemple générer des harmoniques qui vont vernir perturber par repliement de spectre les traitements de signaux analogiques dans la bande de fréquences souhaitée (incluant typiquement les bandes de fréquences C, T, et S).

Il est donc nécessaire afin d'atteindre le niveau de performance souhaité pour le dispositif proposé (par exemple un niveau de plage dynamique libre de signaux parasites (en anglais « Spurious Free Dynamic Range » ou « SFDR ») d'au moins 60dB pour une qualité de réception professionnelle, alors que les produits électroniques grand-public ont des performances de SFDR ne dépassant généralement pas 40 dB), de minimiser, voire de s'affranchir, des bruits parasites radio de la machine informatique dans laquelle le dispositif est inséré lors de son utilisation.

Dans un ou plusieurs modes de réalisation, l'interface d'entrée INₖ est alimentée par un bloc d'alimentation faible bruit, de manière à pouvoir y connecter un câble de réception de signal de diffusion vidéo par satellite pour alimenter électriquement la parabole qui peut être connectée à l'interface d'entrée INₖ par le biais d'un câble (typiquement coaxial).

La composition de la voie d'acquisition de la Fig. 2a procure de multiples avantages en ce qu'elle répond aux problèmes techniques suivants, qui se posent notamment pour un dispositif d'acquisition multistandards (par exemple pouvant être configuré pour l'acquisition de signaux de diffusion DVB-T/T2 (standards de diffusion terrestre, dits « T »), DVB-C/C2 (standards de diffusion par câble, dits « C »), et DVB-S/S2 (standards de diffusion par satellite, dits « S »)) dont les composants sont regroupés avec une forte densité sur une carte électronique (par exemple de faibles dimensions, comme une carte d'extension pour serveur informatique, par exemple au format PCIe bas profil) :

L'amplificateur LNA, par exemple configuré pour réaliser une amplification de +12dB, sera de préférence choisi pour opérer sur des signaux dans la bande de fréquences d'entrée choisie pour le dispositif (typiquement de 40 MHz à 2,2 GHZ pour un dispositif d'acquisition multistandards C/T/S). Dans un ou plusieurs modes de réalisation, l'amplificateur LNA devra donc être configuré pour opérer sur une large bande de fréquences correspondant à la juxtaposition des bandes de fréquences respectives des standards considérés. Par conséquent, le bruit généré dans cette bande de fréquences par le système comprenant le dispositif et la machine informatique dans lequel le dispositif est inséré pourra être amplifié par l'amplificateur LNA, ce qu'il convient d'éviter afin d'éviter ces perturbations.

Le problème d'environnement numérique venant perturber le fonctionnement des composants analogiques du dispositif proposé se pose donc, et de manière aigüe, pour l'amplificateur LNA de chaque voie d'acquisition VAₖ du dispositif, du fait qu'il fait partie de la chaine radiofréquences (RF) de la voie VAₖ.

Du fait que, dans un ou plusieurs modes de réalisation, les tuners utilisés intègrent chacun typiquement un composant analogique de boucle à verrouillage de phase (en anglais « Phase Lock Loop », ou PLL) (le composant PLL lui-même comprenant un oscillateur contrôlé en tension (en anglais, « Voltage-Controlled Oscillator », ou VCO) qui est analogique), le bruit généré par les composants numériques environnants est aussi susceptible de dégrader les performances du composant PLL de chaque tuner, en dégradant la pureté fréquentielle de la fréquence du signal généré par le composant PLL du tuner.

Les performances des composants de la chaine RF de chaque voie d'acquisition (typiquement amplificateur LNA et chaque composant tuner) sont donc dégradées par le bruit généré dans la bande de fréquences d'entrée choisie pour le dispositif par les composants numériques environnant les composants de la chaine RF, c'est-à-dire les composants numériques et d'alimentation de la carte électronique sur laquelle sont implantés les composants du dispositif, et les composants numériques et ceux d'alimentation des dispositifs (alimentation, mémoire(s), processeur(s), etc.) de la machine informatique (serveur informatique, ordinateur personnel, etc.) dans laquelle le dispositif proposé est inséré.

Les composants tuners disponibles sur le marché n'opèrent pas sur une bande de fréquences d'entrée aussi large que celle nécessaire pour un dispositif multistandards de diffusion vidéo (les bandes de fréquences des standards DVB de diffusion par câble et terrestre (C/C2 et T/T2) correspondant typiquement à la bande de fréquences entre 40 MHz et 800 MHz, tandis que la bande de fréquences des standards DVB de diffusion par satellite couvre typiquement la bande entre 900 MHz et 2,2 GHz), et opèrent soit sur des bandes de fréquences correspondant aux standards DVB de diffusion par câble et/ou terrestre (C/C2 et/ou T/T2) (typiquement entre 40 MHz et 800 MHz), soit sur la bande de fréquences correspondant aux standards DVB de diffusion par satellite (S/S2) (typiquement entre 900 MHz et 2,2 GHz). Dans un ou plusieurs modes de réalisation, chaque voie d'acquisition du dispositif proposé comprend ainsi deux tuners : un premier tuner (satellite) TUN1 configuré pour opérer dans la bande de fréquences correspondant aux standards DVB de diffusion par satellite (S/S2) (typiquement entre 900 MHz et 2,2 GHz), et un deuxième tuner TUN2 (câble et/ou terrestre) configuré pour opérer dans les bandes de fréquences correspondant aux standards DVB de diffusion par câble et/ou terrestre (C/C2 et/ou T/T2) (typiquement entre 40 MHz et 800 MHz).

Dans un système comprenant un émetteur et un récepteur, l'émetteur étant un récepteur parabolique qui produit un signal d'entrée fourni, par le biais d'un câble (typiquement coaxial), au dispositif proposé fonctionnant comme récepteur du système, l'émetteur a une impédance de sortie, par exemple sensiblement égale à 75 ohms pour un émetteur récepteur parabolique configuré pour recevoir des signaux DVB de diffusion vidéo par satellite. Il est souhaitable, pour conserver l'énergie des signaux fournis par l'émetteur en entrée de l'émetteur, et éviter des pertes d'énergie par retour de signal, que la chaine de réception du récepteur soit adaptée en impédance. Par exemple, l'impédance d'entrée d'un récepteur recevant des signaux transmis par un récepteur parabolique doit être sensiblement égale à 75 ohms.

Les composants « tuner » disponibles sur le marché sont typiquement fournis avec des spécifications de mise en œuvre avec des composants prédéfinis de manière à ce que leur impédance d'entrée soit sensiblement égale à 75 ohms dans la bande de fréquences de fonctionnement du tuner.

Cependant, l'utilisation de deux tuners afin de concevoir un dispositif d'acquisition multistandards DVB (C et/ou T, et S) conduirait, comme illustré sur la Fig. 2b(a), à scinder en deux le signal issu de l'émetteur (par exemple un LNA à sortie unique) dont l'impédance est de 75 ohms, pour alimenter deux tuners (TUN S et TUN C/T), chacun ayant une impédance sensiblement égale à 75 ohms dans la bande de fréquences respective d'utilisation du tuner. L'impédance de la source ne serait alors plus adaptée à celle des deux tuners, et un problème de désadaptation d'impédance apparaitrait.

De plus, les impédances des premier et deuxième tuners sont égales à 75 ohms uniquement dans la bande de fréquences d'utilisation de chaque tuner : par exemple, l'impédance du premier tuner (satellite) configuré pour opérer dans la bande de fréquences correspondant aux standards DVB de diffusion par satellite (S) (typiquement entre 900 MHz et 2,2 GHz) n'est sensiblement égale à 75 ohms que dans cette bande de fréquences, et l'impédance du deuxième tuner (câble et/ou terrestre) configuré pour opérer dans les bandes de fréquences correspondant aux standards DVB de diffusion par câble et/ou terrestre (C/C2 et/ou T/T2) (typiquement entre 40 MHz et 800 MHz) n'est sensiblement égale à 75 ohms que dans cette bande de fréquences. Par exemple, l'impédance du deuxième tuner sera sensiblement égale à 75 ohms pour les signaux de fréquence jusqu'à 800 MHz, puis chutera pour les signaux de fréquence supérieure à 800 MHz. De même, l'impédance du deuxième tuner sera sensiblement égale à 75 ohms pour les signaux de fréquence jusqu'à 2,2 GHz, puis chutera pour les signaux de fréquences supérieures à 2,2 GHz.

Dès lors, si l'on choisissait de diviser la piste de cuivre (comme illustré sur la Fig. 2b (a) et (b)), c'est-à-dire le chemin de signal issu de la source (dont l'impédance est sensiblement égale à 75 ohms) en deux branches, chacune alimentant un des deux tuners du dispositif proposé (respectivement le premier et le deuxième tuner), on créerait une autre situation de désadaptation d'impédance pour les signaux de fréquences non situés dans la bande de fréquences dans laquelle le premier et/ou le deuxième tuner présente une impédance d'entrée sensiblement égale à 75 ohms.

Par exemple, en référence à la Fig. 2b (b), pour un signal reçu de type diffusion vidéo par satellite, le chemin principal (a) du signal reçu (qui sera dans la bande de fréquences entre 900 MHz et 2,2 GHz) sera, en sortie de l'amplificateur LNA, le chemin conduisant au premier tuner (satellite). Il reste qu'il y aura un deuxième chemin (β) conduisant vers le deuxième tuner (câble et/ou terrestre) vers lequel une partie du signal reçu circulera, ce qui générera des réflexions (chemin parfois appelé en anglais « stub », pour désigner le chemin d'une onde parasite qui fait un aller-retour) du fait de la désadaptation d'impédance du deuxième tuner pour les signaux de fréquences dans la bande de fréquences entre 900 MHz et 2,2 GHz, réflexions qui seront déphasées avec un déphasage dépendant du temps de propagation du signal dans le deuxième chemin (temps qui n'est pas négligeable pour des signaux de fréquence très élevée). Ce déphasage peut, au pire, être sensiblement égal à π, et donc en opposition de phase, ce qui conduira à une réflexion qui viendra fortement atténuer le signal reçu, ce qui s'apparente à un filtrage du signal reçu par un filtre à encoches (en anglais « notch filter »).

Le schéma illustré sur la Fig. 2b (parties (a) et (b)) n'est donc pas utilisable pour un dispositif d'acquisition multistandards dès lors que des performances élevées (de niveau professionnel) sont recherchées.

Dans un ou plusieurs modes de réalisation, chaque voie d'acquisition du dispositif proposé comprend un amplificateur répartiteur radiofréquences faible bruit à entrée simple et doubles sorties, comme illustré sur la Fig. 2b(c), qui opère comme un double LNA à sorties indépendantes tout en couvrant une large bande de fréquences, correspondant par exemple à un dispositif multistandards C/T/S (de 40 Mhz à 2,2 GHz environ).

L'utilisation d'un amplificateur répartiteur radiofréquences faible bruit à entrée simple et double sorties permet avantageusement au dispositif de fonctionner avec un amplificateur dont les sorties sont disjointes (du fait de la configuration de l'amplificateur avec une importante réjection entre les sorties) tout en ayant chacune une impédance sensiblement égale à 75 ohms, de sorte que les réflexions éventuellement reçues sur une sortie lorsque l'autre sortie est principalement utilisée, du fait de la désadaptation d'impédance de cette sortie dans la bande de fréquences des signaux reçus et amplifiées par l'amplificateur, n'impactent pas les signaux de l'autre sortie qui transitent de cette autre sortie vers un tuner adapté en impédance sur la bande de fréquences de ces signaux.

En référence à la Fig. 3a(b), dans un ou plusieurs modes de réalisation, l'amplificateur répartiteur radiofréquences faible bruit 3b_k est à entrée simple différentielle et à double sorties différentielles, de manière à avantageusement fournir une meilleure immunité au bruit.

En référence aux parties (a) et (b) de la Fig. 3a, l'entrée simple différentielle de l'amplificateur faible bruit permet avantageusement d'éviter que des signaux de bruit présents sur le chemin de signal (λ) provenant de l'interface d'entrée IN de la voie d'acquisition ne viennent perturber le signal issu de l'interface d'entrée 11a, et que ces signaux de bruit soient amplifiés par l'amplificateur, ce qui serait le cas sur un schéma de type celui illustré par la Fig. 3a(a).

De manière à annuler une perturbation électrique survenant sur le chemin de signal entre le signal issu de l'interface d'entrée 3a_k et l'entrée de l'amplificateur 3b_k, l'interface d'entrée 3a_k peut être configurée pour comprendre un point chaud 11a et une masse 11b. Comme illustré sur la figure 3a(b), dans un ou plusieurs modes de réalisation, le point chaud 11a de l'interface d'entrée 3a_k peut être couplé électriquement 10a à l'entrée plus de l'amplificateur répartiteur 3b_k, et l'entrée moins de l'amplificateur répartiteur peut être couplée électriquement 10b à la masse 11b de l'interface d'entrée 3a_k.

Dans un ou plusieurs modes de réalisation, l'amplificateur répartiteur radiofréquences faible bruit 3b_k peut être, comme illustré sur la figure 3a(b), à entrée différentielle unique et à double sorties différentielles. Par exemple, l'amplificateur répartiteur radiofréquences faible bruit 3b_k peut être configuré pour diviser chacun des chemins de l'entrée différentielle en deux chemins qui sont respectivement fournis en entrée de deux amplificateurs à sortie différentielle. Par exemple, l'amplificateur peut être de type 1:2, en étant configuré pour distribuer une entrée vers deux sorties.

Afin d'immuniser encore plus fortement les signaux acquis contre les signaux de bruit, une partie de la chaine d'acquisition analogique du dispositif proposé plus grande que le sous-ensemble interface d'entrée et amplificateur LNA peut avantageusement être constituée de composants différentiels.

Par exemple, comme illustré sur la Fig. 3b, dans un ou plusieurs modes de réalisation, les premier et deuxième tuners peuvent être choisis à entrée différentielle. Dans ces modes de réalisation, dans une voie d'acquisition VAₖ, une première sortie différentielle 12a_1, 12b_1 de l'amplificateur 3b_k peut être couplée à l'entrée différentielle du premier tuner 3c1_k, et une deuxième sortie différentielle 13a_1, 13b_1 de l'amplificateur 3b_k peut être couplée électriquement à l'entrée différentielle du deuxième tuner 3c2_k.

Dans un ou plusieurs modes de réalisation, les zones, parties, ou composants analogiques du dispositif proposé peuvent être isolés des perturbations extérieures de manière à en améliorer le fonctionnement, par un blindage (par exemple un blindage radiofréquences) (pouvant comprendre, dans un ou plusieurs modes mode de réalisation, un capot de blindage) recouvrant ces parties sensibles.

Par exemple, dans un ou plusieurs modes de réalisation, les zones, parties, ou composants analogiques d'une ou plusieurs voies d'acquisition du dispositif proposé sont protégés des perturbations électromagnétiques extérieures par un blindage, comprenant par exemple un capot de blindage. Le capot de blindage permet de protéger efficacement les signaux électroniques circulant sous le capot de blindage afin qu'ils ne soient pas perturbés par le bruit, et notamment le bruit haute fréquence qui se trouve en dehors du capot de blindage. Dans un ou plusieurs modes de réalisation, le blindage protégeant une partie analogique du bruit électromagnétique environnant comprend un capot de blindage et une ou plusieurs couches de cuivre de masse (de préférence analogique) formées dans le cuivre du circuit imprimé de la carte électronique du dispositif en fermeture de blindage dans la carte électronique et en regard du capot de blindage.

Par exemple, un bus de configuration numérique CTRLₖ, par exemple de type I₂C, qui pourra être utilisé dans le dispositif proposé pour venir, à partir d'un composant contrôleur du dispositif configuré pour configurer des paramètres configurables des composants analogiques d'une ou plusieurs des voies d'acquisition du dispositif proposé (tel que, par exemple, le gain de l'amplificateur faible bruit si cet amplificateur est à gain variable), génèrera des signaux perturbateurs pour ces composants analogiques.

Selon le mode de réalisation choisi, un blindage radiofréquences peut être utilisé pour protéger des signaux de bruit issus des composants numériques du dispositif et/ou de la machine informatique dans laquelle le dispositif est inséré un ou plusieurs des composants radiofréquences du dispositif. Par exemple, l'ensemble de l'écosystème de l'amplificateur radiofréquences faible bruit, c'est-à-dire l'ensemble des composants intégrés au dispositif proposé comprenant le dispositif amplificateur lui-même ainsi que d'autres composants utilisés pour mettre en œuvre le composant amplificateur, l'ensemble de l'écosystème de chaque composant tuner, et/ou l'ensemble de l'écosystème du composant convertisseur analogique vers numérique (CAN), peuvent être protégés par un capot ou un blindage radiofréquences. Il peut être néanmoins considéré dans des modes de réalisation du dispositif proposé, en particulier dans les modes de réalisation où des chemins différentiels de signaux sont utilisés sur le composant convertisseur analogique vers numérique, que ce composant est moins sensible aux bruits de l'environnement numérique du fait de l'utilisation de ces chemins différentiels (notamment lorsqu'il apparait que ces chemins différentiels diminuent suffisamment l'intensité des signaux de bruit qui viendraient perturber le signal traité par le composant convertisseur analogique vers numérique), et qu'il n'est dès lors pas nécessaire de « capoter » ce composant ou son environnement.

En particulier, en référence à la Fig. 2a, dans un ou plusieurs modes de réalisation, l'interface d'entrée IN 3a_k de chaque voie d'acquisition pourra être protégée par un blindage, et par exemple être coaxiale, afin par exemple de pouvoir avantageusement connecter en entrée de la voie d'acquisition 3_k VAₖ un câble coaxial de réception de signaux radiofréquences, comme par exemple un câble de réception de signaux vidéo diffusés par satellite, par reprise de blindage à 360 degrés (sur tout le pourtour du câble) pour protéger l'interface d'entrée par le blindage.

Dans un ou plusieurs modes de réalisation, un filtrage, par exemple de type passe bande (par exemple de type LC ou de type RC), est configuré à la frontière entre un sous-ensemble analogique d'une part, et un sous-ensemble numérique ou un sous-ensemble alimentation d'autre part.

Dans un ou plusieurs modes de réalisation, une unité de filtrage pourra être implantée sur la carte électronique du dispositif proposé sur la face de la carte électronique sur laquelle est implanté le blindage protégeant le sous-ensemble analogique (ou la partie analogique). L'unité de filtrage pourra être connectée au sous-ensemble analogique protégé par le blindage, et être implantée sur un chemin de signal connectant électriquement un ou plusieurs composants situés à l'extérieur du blindage au sous-ensemble analogique. Dans un ou plusieurs modes de réalisation, l'unité de filtrage pourra comprendre un composant capacitif implanté sous le blindage et connecté à une masse analogique, et pourra comprendre en outre un composant de filtrage placé en entrée de l'unité de filtrage en série sur le chemin de signal. Selon le mode de réalisation, le composant de filtrage pourra être placé en traversée du blindage ou au voisinage immédiat de l'extérieur du blindage.

Ainsi, avantageusement, grâce au placement du composant capacitif de l'unité de filtrage sous le blindage et au placement du composant de filtrage de l'unité de filtrage placé en entrée de l'unité de filtrage en série sur le chemin de signal en traversée du blindage ou au voisinage immédiat (soit à proximité immédiate, ou le plus proche possible) de l'extérieur du blindage, l'efficacité du filtrage des perturbations électromagnétiques pourra être améliorée. Ces perturbations électromagnétiques sont typiquement générées par les composants extérieurs au blindage, qu'il s'agissent de composants sur la carte électronique (par exemple les composants d'un bloc perturbateur ou de composants externes à la carte électronique (par exemple les perturbations électromagnétiques générés par une alimentation d'un serveur informatique ou un PC dans lequel la carte électronique est insérée (par exemple sur un port d'extension)), et si elles n'étaient pas filtrées viendraient perturber, par couplage sur le signal pénétrant sous le blindage, le fonctionnement du sous-ensemble analogique.

Dans un ou plusieurs modes de réalisation, l'unité de filtrage proposée dans un ou plusieurs modes de réalisation d'une ou plusieurs voies d'acquisition du dispositif proposé pourra comprendre un composant de filtrage placé en entrée de l'unité de filtrage en série sur un chemin de signal connectant électriquement des composants (par exemple électroniques) situés à l'extérieur du blindage (par exemple un signal provenant d'un bloc perturbateur électromagnétique extérieur au blindage protégeant le sous-ensemble analogique) au sous-ensemble analogique, qui est avantageusement placé en traversée du blindage ou, selon le mode de réalisation choisi, à proximité immédiate du blindage (espacé le moins possible du blindage, par exemple du capot de blindage), de manière à filtrer efficacement toute perturbation électromagnétique extérieur au sous-ensemble analogique protégé par le blindage (par exemple placé sous un capot de blindage). Ce placement du composant de filtrage d'entrée de l'unité de filtrage au plus près du blindage ou, lorsque cela est possible, en traversée du blindage (et donc du capot lorsque le blindage comprend un capot), permet avantageusement de limiter, voire d'éviter, l'exposition du signal filtré en sortie de ce composant de filtrage au bruit électromagnétique susceptible de perturber le fonctionnement des composants protégés par le blindage. En effet, dans les modes de réalisation dans lesquels le composant de filtrage est placé au plus près du blindage, la longueur de la portion de chemin de signal en sortie de ce composant située à l'extérieur du blindage (portion de chemin de signal entre la sortie du composant de filtrage et le blindage) est réduite autant que possible pour éviter que cette portion de chemin ne capte du bruit électromagnétique environnant qui serait alors injecté avec le signal pénétrant le blindage, ou limite autant que possible la quantité de bruit capté. Dans les modes de réalisation dans lesquels le composant de filtrage est placé en traversée du blindage, le signal en sortie de ce composant n'est pas pollué par le bruit environnant puisqu'il est protégé par le blindage.

L'unité de filtrage proposée dans un ou plusieurs modes de réalisation d'une ou plusieurs voies d'acquisition du dispositif proposé pourra comprendre en outre un composant capacitif connecté à une masse analogique, situé en aval du composant de filtrage sur le chemin de signal, qui reçoit donc en entrée un signal filtré issu du composant de filtrage placé en série. Ce composant capacitif est implanté sous le blindage, et ainsi placé à l'intérieur du blindage (par exemple sous un capot de blindage protégeant le sous-ensemble analogique), afin de pouvoir placer le composant de filtrage, situé en amont, en traversée du blindage ou à proximité immédiate du blindage.

Ce composant capacitif de l'unité de filtrage se comportera comme un fil pour les signaux haute fréquence qui le traverseront, en particulier pour les signaux de bruit haute fréquence, et peut donc être utilisé pour diriger des perturbations haute fréquence présentes dans le signal en sortie du composant de filtrage vers la masse. Si ce composant capacitif de l'unité de filtrage était placé à l'extérieur du blindage protégeant le sous-ensemble analogique, le(s) composant(s) de filtrage filtrerai(en)t le bruit du signal le(s) traversant, mais ce bruit se trouverait couplé sur le composant capacitif de l'unité de filtrage par bruit électrique de masse, de sorte que le bruit filtré par le(s) composant(s) de filtrage se retrouverait tout de même du côté opposé à la masse numérique de(s) composant(s) de filtrage (ce bruit serait miroir du bruit de masse numérique présent en dehors du blindage), et pénétrerait le sous-ensemble analogique protégé par le blindage. L'unité de filtrage serait donc moins efficace, et le placement proposé du composant capacitif de l'unité de filtrage sous le blindage permet avantageusement d'éviter cet inconvénient.

L'efficacité de l'unité de filtrage proposée est ainsi préservée, d'une part par le placement du composant de filtrage d'entrée de l'unité de filtrage (placé en série) au plus proche ou, selon le mode de réalisation, en traversée du blindage (par exemple du capot de blindage), et d'autre part par le placement du composant capacitif de sortie de l'unité de filtrage sous le blindage. Ainsi, selon le mode de réalisation choisi, le dispositif proposé permet avantageusement de préserver (et donc d'améliorer par rapport aux configurations existantes) l'efficacité du filtrage effectué par l'unité de filtrage entre chaque sous-ensemble analogique et le sous-ensemble numérique correspondant, ou entre chaque sous-ensemble analogique et le sous-ensemble d'alimentation correspondant.

Dans un ou plusieurs modes de réalisation, le sous-ensemble analogique considéré pourra comprendre un ou plusieurs composants analogiques de réception de signaux radiofréquences, ce qui sera typiquement le cas pour chaque sous-ensemble analogique de chaque voie d'acquisition protégé par un blindage comprenant un capot de blindage.

Par exemple, l'unité de filtrage proposée pourra être mise en œuvre, pour une ou plusieurs voies d'acquisition du dispositif proposé, sur chaque chemin de signal entre un sous-ensemble analogique protégé par un blindage et un bloc alimentation/numérique implanté sur la carte électronique du dispositif proposé, le bloc alimentation/numérique comprenant un sous-ensemble numérique et/ou un sous-ensemble d'alimentation, le sous-ensemble numérique comprenant un ou plusieurs composants numériques, et le sous ensemble d'alimentation comprenant un ou plusieurs composants d'alimentation électrique du sous-ensemble analogique.

En particulier, dans un ou plusieurs modes de réalisation, le chemin de signal considéré pourra être entre le sous-ensemble analogique et un sous-ensemble numérique, ce qui permet avantageusement d'utiliser l'unité de filtrage dans la configuration proposée pour filtrer les signaux entre le sous-ensemble analogique et le sous-ensemble numérique. Par exemple, dans un ou plusieurs modes de réalisation, l'unité de filtrage sera configurée pour filtrer un signal de contrôle issu du sous-ensemble numérique pour contrôler le sous-ensemble analogique, par exemple pour le configurer (par exemple un signal de contrôle au format I2C).

Dans un ou plusieurs modes de réalisation, le chemin de signal considéré pourra être entre le sous-ensemble analogique et un sous-ensemble d'alimentation, ce qui permet avantageusement d'utiliser l'unité de filtrage dans la configuration proposée pour filtrer les signaux entre le sous-ensemble analogique et le sous-ensemble d'alimentation. Par exemple, dans un ou plusieurs modes de réalisation, l'unité de filtrage sera configurée pour filtrer un signal d'alimentation issu du sous-ensemble alimentation pour alimenter électriquement le sous-ensemble analogique.

Dans un ou plusieurs modes de réalisation, l'unité de filtrage comprendra une cellule de filtrage de type LC ou RC.

Dans un ou plusieurs modes de réalisation, le blindage comprendra un capot de blindage, et le composant de filtrage placé en série sur le chemin de signal sera placé en traversée du capot de blindage ou au voisinage immédiat du capot de blindage.

Dans un ou plusieurs modes de réalisation, le blindage comprendra un capot de blindage, et le composant de filtrage placé en série sera un composant inductance placé en série à cheval sous le capot de blindage entre le bloc alimentation/numérique et le sous-ensemble analogique.

Dans d'autres modes de réalisation, le blindage comprendra un capot de blindage, et le composant de filtrage placé en série sera un composant résistif placé en série à cheval sous le capot de blindage entre le bloc alimentation/numérique et le sous-ensemble analogique.

Un exemple non limitatif de mise en œuvre d'une unité de filtrage proposée dans un ou plusieurs modes de réalisation est illustré par la Fig. 3c.

Comme illustré sur la Fig. 3c, un filtrage, par exemple de type LC comprenant un condensateur C 24 (composant capacitif) relié à une masse analogique et une inductance L 23 (composant de filtrage), peut être configuré entre l'arrivée d'un bus de configuration numérique 20 (par exemple le bus I₂C comme illustré sur la figure) et une entrée d'un composant analogique ou d'un groupe de composants analogiques (correspondant par exemple à l'amplificateur faible bruit 3b_k, à l'un des tuners TUN1 ou TUN2 3c1_k et 3c2_k ou au convertisseur analogique vers numérique (CAN) du composant 3d_k de la Fig. 2a) formant un sous-ensemble analogique 25 protégé par un capot de blindage 22. On réalise ainsi un filtrage entre un sous-ensemble numérique (tel que le sous-ensemble 21a illustré sur la Fig. 3c) générateur de bruit et un sous-ensemble analogique/radiofréquences (tel que le sous-ensemble 21b illustré sur la Fig. 3c).

En référence à la Fig. 3c, dans des modes de réalisation où un filtrage de type LC est utilisé, de manière à améliorer l'efficacité du filtrage entre, d'une part un sous-ensemble analogique comprenant un ou plusieurs composants analogiques et protégé des perturbations électromagnétiques par un capot, et d'autre part un sous-ensemble de composants numériques et/ou un sous-ensemble d'alimentation électrique, le filtrage LC peut être configuré en plaçant le composant inductance 23 (composant de filtrage) au plus près du capot de blindage 22, voire, si la configuration du capot de blindage 22 le permet (notamment si le capot de blindage est assez haut), en plaçant le composant inductance à cheval sous le capot de blindage 22 (en traversée du capot de blindage 22) entre la partie numérique 21a et la partie analogique 21b. La partie basse impédance du filtre LC (composant capacitif 24 relié à la masse) est placée dans la partie analogique, sous le blindage protecteur.

Les alimentations DC/DC ont l'avantage de fournir un très bon rendement tout en ne chauffant pas, mais présentent l'inconvénient de générer du bruit qui peut venir perturber les signaux traités par les composant analogiques d'une ou plusieurs voies d'acquisition du dispositif proposé. En effet, une alimentation DC/DC a une fréquence de travail déterminée, mais produit aussi des harmoniques de cette fréquence de travail, ce qui génère un bruit large bande sur le signal de sortie de l'alimentation DC/DC.

Dans un ou plusieurs modes de réalisation où une ou plusieurs alimentations DC/DC sont utilisées pour alimenter un sous-ensemble analogique (un composant ou un groupe de composants, comme par exemple l'amplificateur radiofréquences faible bruit) du dispositif proposé, un régulateur linéaire, par exemple à faible déchet pour éviter qu'il ne chauffe trop (en anglais, « Load Drop-Out », ou LDO), peut être placé entre la sortie de l'alimentation et l'entrée du sous-ensemble analogique.

Par exemple, comme illustré sur la figure 3c, on pourra choisir un régulateur linéaire configuré pour convertir le signal bruité en sortie de l'alimentation DC/DC à 2,2V en un signal débruité sur une bande de fréquences déterminé dite bande de réjection.

Cependant, tout régulateur linéaire comportera des condensateurs parasites qui ne filtreront pas les signaux hautes fréquences (un condensateur se comportant à hautes fréquences comme un fil). Dès lors, le régulateur linéaire sera en mesure de filtrer le bruit du signal issu de l'alimentation DC/DC dans la bande de réjection, mais recopiera ce bruit en dehors de la bande de réjection.

Afin de filtrer ce bruit hautes fréquences en sortie d'un régulateur linéaire, on pourra, dans un ou plusieurs modes de réalisation, utiliser un filtre passe-bas, tel que, par exemple, un filtre LC. Avantageusement, dans les modes de réalisation où un filtre LC est utilisé, on pourra prévoir de positionner le composant inductance au plus près ou, selon le mode de réalisation, à cheval sous le capot de blindage protégeant le sous-ensemble analogique/radiofréquences alimenté par l'alimentation DC/DC.

La Fig. 3d montre une partie de voie d'acquisition VAₖ selon un ou plusieurs modes de réalisation, comprenant une alimentation électrique 30 configurée pour alimenter un récepteur parabolique connecté à l'interface d'entrée INₖ de la voie d'acquisition VAₖ. La sortie de l'alimentation électrique 30 présente typiquement une impédance très faible (représentée sur la figure par une masse virtuelle 30a). L'alimentation électrique 30 permet d'alimenter, par le câble, par exemple de type coaxial, connectant le récepteur parabolique à l'interface d'entrée 31 de la voie d'acquisition, les circuits électroniques du récepteur parabolique, notamment pour réaliser la conversion fréquentielle des signaux reçus par le récepteur parabolique vers la bande L de réception satellite. Le récepteur parabolique sera en effet typiquement configuré pour effectuer une transposition des signaux reçus par satellite vers la bande de fréquences dite « bande L » dans laquelle se situeront les signaux reçus sur l'interface d'entrée INₖ de la voie d'acquisition VAₖ. Les circuits de transposition fréquentielle du récepteur parabolique seront donc alimentés électriquement par une alimentation 30 (« LNB Pow » sur la figure 3d) du dispositif proposé dans un ou plusieurs modes de réalisation.

L'alimentation 30 peut avantageusement être choisie configurable, par exemple par le biais d'une interface de commande I₂C, afin d'être éteinte par configuration lorsque l'interface d'entrée INₖ de la voie d'acquisition VAₖ n'est pas connectée à un récepteur parabolique, mais par exemple plutôt à un récepteur de signaux de diffusion vidéo par câble et/ou terrestre. Cela permet avantageusement d'éviter que l'alimentation 30 ne produise du bruit interférant sur le fonctionnement des autres composants de la carte, notamment les composants des sous-ensembles analogiques qui sont particulièrement sensibles au bruit.

Ainsi, l'utilisateur du dispositif proposé peut configurer l'alimentation 30 ainsi que d'autres composants du dispositif proposé, par le biais d'une interface de commande, par exemple de type I²C, en fonction du type de récepteur connecté à l'interface d'entrée INₖ de la voie d'acquisition VAₖ. A cet effet, dans un ou plusieurs modes de réalisation, une interface homme-machine (IHM) pourra être prévue afin de permettre à un utilisateur du dispositif proposé de piloter les différents éléments configurables du dispositif proposé par le biais d'une interface de commande, par exemple de type I²C.

Dans un ou plusieurs modes de réalisation, afin d'éviter que la masse virtuelle 30a représentant l'impédance très faible de l'alimentation 30 ne vienne perturber le chemin du signal 32 vers l'interface d'entrée 31 INₖ de la voie d'acquisition 31, une cellule de filtrage 33 est insérée sur le chemin de signal 32 entre l'alimentation 30 et l'interface d'entrée 31 INₖ de la voie d'acquisition VAₖ. Dans un ou plusieurs modes de réalisation, on pourra utiliser une cellule de filtrage 33 du quatrième ordre, comme illustré sur la figure 3e.

De préférence, la cellule de filtrage sera configurée pour réaliser un filtrage passe-bande dans une bande de fréquences comprenant la bande de fréquences des signaux reçus sur l'interface d'entrée 31 INₖ, comme par exemple comprenant la bande de fréquences dite « bande L ».

Différentes solutions de placement ou de routage des composants sur la carte du dispositif proposé sont exposées ci-après, dans le cadre de modes de réalisation du dispositif proposé qui peuvent être mis en œuvre isolément ou être combinés les uns avec les autres.

Dans un ou plusieurs modes de réalisation du dispositif proposé, les composants de chaque voie d'acquisition du dispositif proposé traitant des signaux analogiques (par exemple, en référence à la Fig. 2a, les composants interface d'entrée IN 3a_k, amplificateur LNA 3b_k, tuner 3c1_K et 3c2_k, et convertisseur analogique-numérique dans le démodulateur 3d_k) peuvent être protégés par un ou plusieurs capots de protection électromagnétique. De préférence, dans un ou plusieurs modes de réalisation, il pourra être utilisé plusieurs capots de blindage distincts pour les composants à protéger, voire un capot de protection pour chaque composant à protéger, de manière à avantageusement éviter la survenance d'effets de diaphonie (en anglais, « crosstalk ») entre les différentes voies radiofréquence. Ainsi, dans un ou plusieurs modes de réalisation, des blindages électromagnétiques routés individuellement pourront être prévus sur les composants traitant de signaux analogiques d'une ou plusieurs voies d'acquisition pour se prémunir des effets de diaphonie.

Par exemple, en référence à la Fig. 2a, dans un ou plusieurs modes de réalisation, on pourra prévoir, pour une ou plusieurs voies d'acquisition, un capot de protection électromagnétique pour chaque composant amplificateur LNA 3b_k et pour chaque composant tuner (premier tuner 3c1_k et deuxième tuner 3c2_k) de la voie d'acquisition.

La Fig. 4a montre une vue latérale partielle de la carte électronique 40 du dispositif proposé dans un ou plusieurs modes de réalisation, sur laquelle est implantée un connecteur 41 d'une interface d'entrée d'une voie d'acquisition du dispositif. Le connecteur 41 comprend une partie 41b soudée sur la carte, une partie 41c de connexion d'un câble de transmission de données, et une âme. En référence à la Fig. 4a, dans un ou plusieurs modes de réalisation, l'âme 41a du connecteur 41 traverse la carte 40, et est connectée à un amplificateur faible bruit 42 sur la face opposée 40b de la carte à celle 40a sur laquelle le connecteur 41 est implanté,

Comme illustré par les Figs. 4b, 4c et 4d, d'autres placements et routages du connecteur 41 et de l'amplificateur faible bruit 42 auraient pu être envisagés, qui ne présentent pas cependant tous les avantages du montage de la Fig. 4a.

Par exemple, comme illustré sur les Figures 4b et 4c, il aurait pu être envisagé de placer sur une même face de la carte 40 le connecteur 41 et l'amplificateur faible bruit 42. Placer sur une même face d'une carte électronique les composants actifs de cette carte présenterait certes l'avantage d'un coût de fabrication peu élevé. Cependant le montage illustré sur la Fig. 4b prévoit une âme 41a du connecteur 41 qui vient retraverser la carte 40 dans son épaisseur afin d'être connectée à l'amplificateur faible bruit 42, ce qui allongerait le trajet du signal et dégraderait sa qualité à l'entrée de l'amplificateur faible bruit 42. En outre, étant donné qu'il est difficile de fabriquer une via (une liaison qui passe d'une couche à une autre dans un circuit imprimé, aussi appelée « trou métallisé ») qui traverse des couches de la carte en garantissant une impédance de 75 Ω en entrée de l'amplificateur faible bruit 42, comme discuté ci-dessus, il sera d'autant plus difficile d'obtenir une impédance avec deux vias.

Le montage illustré par la Fig. 4c prévoit, afin d'éviter que l'âme du connecteur ne retraverse la carte 40 dans son épaisseur, de connecter l'âme 41a du connecteur 41 à l'amplificateur faible bruit 42, les deux composants étant placés sur une même face 40a de la carte 40. Cependant, selon le montage de la Fig. 4c, une partie 41a_1 de l'âme 41a du connecteur est non terminée, ce qui créée un « stub » qui génère un effet de filtrage à encoche, du fait des réflexions de signal sur la partie 41a_1 non terminée de l'âme 41a.

Le montage illustré par la Fig. 4d cumule les inconvénients des montages des Figures 4b (via double pour une âme traversant deux fois la carte) et 4c (stub créant des réflexions de signal).

Dans un ou plusieurs modes de réalisation, la plus grande partie, voire possiblement la totalité des composants passifs associés à un composant actif (comme par exemple l'amplificateur faible bruit, ou un tuner d'une voie d'acquisition) peuvent être implantés sur la même face de la carte que le composant actif, et être implantés sous le blindage électromagnétique protégeant le composant actif correspondant.

Ainsi, dans un ou plusieurs modes de réalisation, certains au moins des composants passifs associés à un composant actif protégé par un blindage électromagnétique sont implantés sous le même blindage et sur la même couche que le composant actif correspondant. Cette implantation des composants passifs eu égard à celle de leur composant actif associé est contraire à l'usage en matière d'implantation de composant, selon lequel, pour gagner de la place, les composants passifs sont placés sur la couche inférieure de la carte, en regard de leur composant actif correspondant qui est placé sur la couche supérieure de la carte.

Afin d'isoler au mieux les composants sensibles au bruit numérique (composants traitant des signaux analogiques) des composants générateurs de bruit numérique, les composants principaux d'une voie d'acquisition sont implantés dans des zones séparées physiquement sur la carte du dispositif proposé, comme illustré sur la Fig. 4e : dans un ou plusieurs modes de réalisation, en allant d'une extrémité à l'autre de la carte électronique 40 du dispositif proposé illustrée sur la figure, en commençant par la gauche, les connecteurs d'entrée des voies d'acquisition du dispositif proposé peuvent être réunis dans une première zone 40_1 de la carte 40, l'amplificateur faible bruit de chaque voie d'acquisition peut être implanté dans une deuxième zone 40_2 de la carte 40, adjacente de la première zone 40_1 de la carte 40, les premier et deuxième tuners de chaque voie d'acquisition peuvent être implantés dans une troisième zone 40_3 de la carte 40, adjacente de la deuxième zone 40_2 de la carte 40, le démodulateur de chaque voie d'acquisition peut être implanté dans une quatrième zone 40_4 de la carte 40, adjacente de la troisième zone 40_3 de la carte 40, le contrôleur du dispositif et le composant de virtualisation, éventuellement regroupés au sein d'un même composant numérique, par exemple sous la forme d'un FPGA, peuvent être implantés dans une cinquième zone 40_5 de la carte 40, adjacente de la quatrième zone 40_4 de la carte 40, et l'alimentation DC/DC de chaque voie d'acquisition peut être implantée dans une sixième zone 40_6 de la carte 40, adjacente de la cinquième zone 40_5 de la carte 40. De manière avantageuse, chacune des première, deuxième, troisième, quatrième, cinquième et sixième zones est configurée pour être physiquement séparée sur la carte de sa/ses zone(s) voisine(s). De préférence, les zones sont avantageusement ordonnées par amplitude des signaux traités croissante : la première zone contient des composants traitant des signaux analogiques d'amplitude de l'ordre du dBmV, la deuxième zone contient des composants traitant des signaux analogiques radio-fréquence, la troisième zone contient des composants traitant des signaux analogiques en fréquence intermédiaire (IF), la quatrième zone contient des composants qui réalisent une conversion analogique vers numérique, la cinquième zone contient des composants traitant des signaux numériques d'amplitude environ 1 V, et la sixième zone contient des composants traitant des signaux numériques d'amplitude environ 12 V. Or, plus un signal est grand en amplitude, plus il est immunisé au bruit environnant. Ainsi, tandis que les composants de la première zone sont extrêmement sensibles au bruit de l'alimentation DC/DC (sixième zone), ce qui justifie d'éloigner au mieux la première zone de la sixième zone, les composants de la cinquième zone sont peu sensibles au bruit de l'alimentation DC/DC, ce qui justifie de les placer une zone adjacente à la cinquième zone.

Les liaisons électriques entre l'alimentation électrique du serveur informatique dans lequel le dispositif proposé est inséré et le(s) composant(s) contrôleur du dispositif et de mise en œuvre de la virtualisation et l'alimentation DC/DC par l'intermédiaire du bus numérique de la carte d'extension sur laquelle sont implantés les composants du dispositif proposé créent des lignes de champ dans le plan de masse de la carte pour le courant retour du courant d'alimentation du dispositif. Ces lignes de champ créent du bruit numérique qui est susceptible de perturber les composants traitant des signaux analogiques implantés sur la carte, et notamment la masse des zones analogiques de la carte. Ainsi, la masse analogique du dispositif proposé (masse des zones analogiques de la carte) est polluée par du bruit généré par les lignes de champ de retour des parties numériques et des alimentations (du dispositif proposé ainsi que du serveur informatique dans lequel le dispositif est inséré).

Pour atténuer ces effets néfastes, dans un ou plusieurs modes de réalisation, une fente dans le plan de masse peut avantageusement être réalisée pour couper les lignes de champ de retour dans le plan de masse.

Dans un ou plusieurs modes de réalisation, une ou plusieurs des voies d'acquisition du dispositif proposé peut comprendre un démodulateur double, de manière à avantageusement produire sur une même voie d'acquisition un double flux de transport vidéo.

La figure 5a illustre un exemple de voie d'acquisition selon un ou plusieurs modes de réalisation, par exemple utilisable pour une ou plusieurs des voies d'acquisition d'un dispositif d'acquisition vidéo de type illustré sur la Fig. 1.

En référence à la figure 5a, la voie d'acquisition VAₖ(2) illustrée sur la figure, comprend, de manière similaire à la voie d'acquisition VAₖ illustrée sur la Fig. 2a et décrite ci-dessus, une interface d'entrée 3a_k et un amplificateur répartiteur radiofréquences faible bruit 3b_k qui pourront être configurés pour fonctionner comme décrit ci-dessus en lien avec l'exemple de voie d'acquisition VAₖ illustré sur la Fig. 2a.

La voie d'acquisition VAₖ(2) comprend par ailleurs un premier tuner double 3c1_k et un deuxième tuner double 3c2_k, qui respectivement comprennent deux premiers tuners et deux deuxième tuners du type des premier et deuxième tuners décrits ci-dessus en lien avec l'exemple de la voie d'acquisition VAₖ illustré sur la Fig. 2a. Ainsi, dans un ou plusieurs modes de réalisation, le premier tuner double 3c1_k comprend deux tuners, chacun configurés pour recevoir en entrée un signal d'entrée et le transposer en fréquence depuis la bande de fréquences de diffusion par satellite pour générer un signal en bande de base, et le deuxième tuner double 3c2_k comprend aussi deux tuners, chacun configurés pour recevoir en entrée un signal d'entrée et le transposer en fréquence depuis la bande de fréquences de diffusion terrestre et/ou par câble pour générer un signal en bande de base.

Le convertisseur CAN et démodulateur 3d_k(2) de la voie VAₖ(2) est, à la différence du convertisseur CAN et démodulateur 3d_k de la Fig. 2a, un convertisseur CAN et démodulateur double, en ce qu'il produit non pas un flux de transport vidéo pour la voie d'acquisition, mais deux flux de transport vidéo pour la voie d'acquisition VAₖ(2) ou, autrement dit, un double flux de transport vidéo pour la voie d'acquisition VAₖ(2).

Dans un ou plusieurs modes de réalisation, le convertisseur-démodulateur CAN/DEMOD 3d_k(2) sera configuré pour recevoir en entrée les premier et deuxième signaux en bande de base BB1_k et BB2_k et générer, sur la base des premier et deuxième signaux en bande de base BB1_k et BB2_k, deux flux de transport vidéo TSₖ_1 et TSₖ_2. Le convertisseur-démodulateur 3d_k(2) pourra typiquement comprendre deux convertisseurs analogique-numérique, respectivement couplés à deux démodulateurs numérique configurés pour démoduler le signal numérique produit par le convertisseur CAN correspondant à partir du signal analogique BB1_k et/ou BB2_k reçu en entrée, ainsi qu'éventuellement un mélangeur, comme illustré sur la Fig. 5a. De manière avantageuse, le convertisseur-démodulateur CAN/DEMOD 3d_k(2) sera configuré pour recevoir en entrée les premier et deuxième signaux en bande de base BB1_k et BB2_k et générer, sur la base des premier et deuxième signaux en bande de base BB1_k et BB2_k, deux flux de transports vidéo, en traitant chacun des signaux d'entrée BB1_k et BB2_k par un bloc CAN/DEMOD du convertisseur-démodulateur double. Dans un ou plusieurs modes de réalisation, chacun des deux démodulateurs doubles peut être configuré pour recevoir en entrée les premier et deuxième signaux en bande de base BB1_k et BB2_k, et pour choisir (par configuration) lequel des premier et deuxième signaux en bande de base BB1_k et BB2_k est utilisé en entrée et démodulé.

Ainsi, dans le cas où l'interface d'entrée 3a_k est connectée à une source de signal de diffusion vidéo par satellite d'entrée INₖ, ce signal est amplifié par l'amplificateur 3b_k pour générer un signal de diffusion vidéo par satellite d'entrée amplifié IN_A1_k. Le signal de diffusion vidéo par satellite d'entrée amplifié IN_A1_k est transposé en fréquence par le tuner double 3c1_k pour générer un signal en bande de base BB1_k, qui est fourni en entrée du convertisseur-démodulateur double 3d_k(2), où il est démodulé par l'un des convertisseurs-démodulateurs pour produire un flux de transport vidéo (TSₖ-1 ou TSₖ2) du double flux de transport vidéo. Dans le cas où l'interface d'entrée 3a_k est connectée à une source de signal de diffusion vidéo par câble ou terrestre d'entrée INₖ, ce signal est amplifié par l'amplificateur 3b_k pour générer un signal de diffusion vidéo par câble ou terrestre d'entrée amplifié IN_A2_k. Le signal de diffusion vidéo par câble ou terrestre d'entrée amplifié IN_A2_k est transposé en fréquence par le tuner double 3c2_k pour générer un signal en bande de base BB2 k, qui est fourni en entrée du convertisseur-démodulateur double 3d_k(2), où il est démodulé par l'un des convertisseurs-démodulateurs pour produire un flux de transport vidéo (TSₖ-1 ou TSₖ2) du double flux de transport vidéo.

Dans un ou plusieurs modes de réalisation, le dispositif proposé pourra comprendre une ou plusieurs de la pluralité de N voies d'acquisition qui comprend deux tuners doubles, et un démodulateur double configuré pour recevoir en entrée les premier et deuxième signaux en bande de base, et générer sur la base des premier et deuxième signaux en bande de base un double flux de transport vidéo respectif fourni en entrée du module de virtualisation multi-canaux. Dans ces modes de réalisation, l'utilisation de tuners double et d'un convertisseur-démodulateur double permet avantageusement de doubler la capacité de traitement de chaque voie d'acquisition, chaque voie d'acquisition étant alors configurée pour générer, à partir de signaux de diffusion vidéo modulés d'entrée, un double flux de transport vidéo.

La Fig. 5b illustre un exemple de dispositif d'acquisition de signaux vidéo selon un ou plusieurs modes de réalisation.

Dans l'exemple non limitatif illustré sur la Fig. 5b, le dispositif d'acquisition 1(2) comprend N = 4 voies d'acquisition VA₁(2) ... VA₄(2). Chacune des N voies d'acquisition VAₖ(2), k=1,...,4, est configurée pour produire un double flux de transport vidéo TSk(2), k=1,...,4, fourni en entrée d'un module 2(2) de virtualisation multi-canaux. Néanmoins, l'homme du métier pourra se rendre compte que le dispositif proposé n'est pas limité à un nombre particulier N (N>1) de voies d'acquisition ou à un type de voie d'acquisition particulier, et qu'en fonction du mode de réalisation le dispositif proposé pourra comprendre plusieurs voies d'acquisition produisant en sortie deux flux vidéo, plusieurs voies d'acquisition produisant en sortie un flux vidéo, et/ou une combinaison d'une ou plusieurs voies d'acquisition produisant en sortie un flux vidéo et d'une ou plusieurs voies d'acquisition produisant en sortie deux flux vidéo.

En référence à la figure 5b, le dispositif d'acquisition vidéo 1(2) comportant une ou plusieurs voies d'acquisition du type de celle illustrée sur la figure 5a sera ainsi avantageusement un dispositif d'acquisition vidéo multi-bandes, auquel il sera possible de connecter, au choix de l'utilisateur, un support de signal de diffusion vidéo par câble, par voie terrestre, ou par satellite. Chaque signal d'entrée INₖ que le dispositif proposé sera apte à acquérir pourra ainsi porter deux signaux, parmi un signal analogique large bande transportant un signal radiofréquences dans la bande de fréquences de diffusion par satellite, un signal radiofréquences dans la bande de fréquences de diffusion terrestre et un signal radiofréquences dans la bande de fréquences de diffusion par câble.

Dans un ou plusieurs modes de réalisation, le dispositif proposé pourra compter N = 4 voies d'acquisition du type de celle illustrée sur la figure 5a et décrite en lien avec l'exemple de la Fig. 5a. Chacune des 4 voies d'acquisition du dispositif proposé sera ainsi configurée pour produire deux flux de transport vidéo respectifs, de sorte que le dispositif pourra fournir 8 flux de transports vidéo en entrée du module de virtualisation et ainsi réaliser la virtualisation de 8 flux de transports vidéo en sortie du dispositif.

Dans un ou plusieurs modes de réalisation, les N=4 voies d'acquisition VAₖ(2) du dispositif 1(2) et le module 2(2) de virtualisation multi-canaux sont implantés sur une carte d'extension, par exemple pour serveur informatique, ce qui a l'avantage de permettre d'insérer le dispositif 1(2) dans tout dispositif informatique disposant d'un slot d'extension au format correspondant, comme par exemple un ordinateur personnel, un serveur informatique, etc.

En fonction du mode de réalisation, la carte d'extension pourra être au format PCI, PCIe, SATA, CXL, ou à tout autre format de carte d'extension, par exemple pour serveur informatique. La fourniture d'un dispositif d'acquisition de signaux de diffusion vidéo modulés au format d'une carte d'extension de type PCIe permet de tirer avantage de la très large utilisation de ce format pour des cartes d'extension dans tous types de dispositif informatique. Dans ce qui suit, on considère l'exemple non limitatif d'un dispositif d'acquisition mis en œuvre sur une carte d'extension au format PCIe. Néanmoins, l'homme du métier pourra se rendre compte que le dispositif proposé n'est pas limité à un format de carte d'extension particulier, et que tout format de carte d'extension pour serveur informatique pourra être utilisé dans le cadre de modes de réalisation du dispositif proposé.

Cependant, du fait de sa petite taille, le format PCIe nécessite de placer les composants de chacune des voies d'acquisition VAₖ(2) à proximité les uns des autres, ce qui provoque des perturbations électro-magnétiques qu'il convient de traiter pour obtenir un niveau de performances souhaitable pour une carte d'acquisition vidéo de qualité professionnelle.

En référence aux figures 5a et 5b, dans un ou plusieurs modes de réalisation, chaque voie d'acquisition VAₖ(2) du dispositif 1(2) de la figure 5b comprend, comme illustré par la figure 5a, une unité d'interface d'entrée IN configurée pour recevoir un signal vidéo d'entrée respectif INₖ susceptible de porter deux signaux à traiter par la voie d'acquisition VAₖ(2). La voie d'acquisition VAₖ(2) est configurée pour être apte à réaliser un traitement de deux signaux portés par le signal vidéo d'entrée INₖ reçu, et pour générer en sortie un flux double (comprenant deux flux vidéo démodulés correspondant respectivement aux deux signaux portés par le signal INₖ reçu en entrée) de transport vidéo respectif TSₖ(2), et le fournir en entrée du module 2(2) de virtualisation multi-canaux.

Dans un ou plusieurs modes de réalisation, l'unité d'interface d'entrée IN peut être configurée pour recevoir des signaux multiplexés en fréquence dans les bandes de fréquences d'intérêt (par exemple S/S2/S2X, T/T2, et/ou C/C2). Par exemple, l'unité d'interface d'entrée IN peut être configurée pour recevoir toutes les chaines de la TNT. En fonction du mode de réalisation choisi et la configuration du dispositif proposé, un ou deux signaux parmi les signaux reçus par l'unité d'interface d'entrée IN peuvent être extraits par un tuner (tuner double (« Dual SAT TUNER » et « Dual TERR & CABLE TUN » dans le cas d'usage où deux signaux reçus sur l'interface d'entrée IN sont traités par la voie d'acquisition VAk(2)) et démodulés en parallèle.

Dans un ou plusieurs modes de réalisation, le module 2(2) de virtualisation multi-canaux peut être mis en œuvre au sein d'un composant, par exemple de type FPGA, qui comprendra en outre un module de contrôle du dispositif proposé, et un module de pilotage de voie d'acquisition configuré pour configurer et/ou commander une ou plusieurs voies d'acquisition VAₖ, par exemple par le biais d'un signal de commande, par exemple de type 12C. En fonction du mode de réalisation, les module de virtualisation multi-canaux, module de contrôle et module de pilotage pourront être mis en œuvre au sein d'un ou de plusieurs composants électroniques du dispositif proposé, et pourront être mis en œuvre (séparément ou conjointement) sous forme logicielle, sous forme matérielle, comme un circuit de type ASIC, ou sous forme d'une combinaison d'éléments matériels et logiciels, comme par exemple un programme logiciel destiné à être chargé et exécuté sur un composant de type FPGA. Le module de contrôle sera typiquement configuré pour piloter les opérations des autres modules du dispositif proposé, et pourra être, en fonction du mode de réalisation, un composant ou une partie d'un composant implémentant un ou plusieurs processeurs ou une unité de calcul, couplé de manière opérationnelle à une mémoire, pour le contrôle des opérations du dispositif proposé, et notamment le contrôle du module de virtualisation et du module de pilotage des voies d'acquisition.

Dans un ou plusieurs modes de réalisation, le module 2(2) de virtualisation multi-canaux peut être configuré pour générer en sortie, par exemple sur une interface de sortie de type PCIe, à partir de 2 × 4 flux de transport vidéo (ou 4 double flux de transport vidéo) reçus en entrée, un flux de trames OUT, chacune portant des données d'un flux de transport vidéo parmi les 2 × 4 flux de transport vidéo fournis en entrée du module 2(2) de virtualisation multi-canaux. En fonction du mode de réalisation, le format des trames correspondra de préférence au format de la carte d'extension sur laquelle le dispositif d'acquisition vidéo 1(2) est implanté.

Par exemple, le flux de sortie OUT pourra comprendre des trames de protocole correspondant au format choisi pour la carte d'extension (par exemple, PCI, PCIe, SATA, CXL). Dans le mode de réalisation préféré dans lequel le dispositif d'acquisition vidéo 1 est implanté sur une carte d'extension au format PCIe, le module 2(2) de virtualisation multi-canaux sera configuré pour délivrer en sortie sur un bus PCIe, par exemple d'un serveur informatique, un flux de trames de protocole PCIe, chacune portant des données d'un flux de transport vidéo parmi les N=4 double flux de transport vidéo (TSₖ(2))_{k-1,...,4} (soit les 8 flux de transport vidéo) possiblement fournis en entrée du module 2(2) de virtualisation multicanaux.

Dans un ou plusieurs modes de réalisation, l'interface d'entrée IN de chacune des 4 voies d'acquisition VAₖ(2) est alimentée par un bloc d'alimentation faible bruit « LNB pow », de manière à pouvoir y connecter un câble de réception de signal de diffusion vidéo par satellite pour alimenter électriquement la parabole qui peut être connectée à l'interface d'entrée IN par le biais d'un câble (typiquement coaxial). En particulier, dans un ou plusieurs modes de réalisation, l'interface d'entrée IN de chacune des 4 voies d'acquisition VAₖ(2) pourra être protégée par un blindage, et par exemple être coaxiale, afin par exemple de pouvoir avantageusement connecter en entrée de la voie d'acquisition un câble coaxial de réception de signaux radiofréquences, comme par exemple un câble de réception de signaux vidéo diffusés par satellite, par reprise de blindage à 360 degrés (sur tout le pourtour du câble) pour protéger l'interface d'entrée par le blindage.

Comme illustré sur la Fig. 5b, dans un ou plusieurs modes de réalisation, le dispositif proposé pourra comprendre un module de contrôle et de virtualisation 2(2), implémenté au sein d'un composant FPGA, comprenant un moteur de virtualisation configuré pour recevoir en entrée jusqu'à 4 double flux de transports vidéo et traiter jusqu'à 8 canaux, et comprenant un contrôleur, couplé de manière opérationnelle à une mémoire (par exemple de type DRAM comme illustré sur la figure), configuré pour contrôler les opérations et le fonctionnement des différents composants du dispositif 1(2). En particulier, le contrôleur peut être configuré pour commander la configuration de l'un ou des deux tuners doubles, et du démodulateur double, par exemple par le biais d'un bus de commande de type I²C (de l'anglais « Inter Integrated Circuit ») comme illustré sur la figure. Ainsi, dans un ou plusieurs modes de réalisation, les opérations du dispositif 1(2) pourront avantageusement être commandées, par exemple par le biais d'une interface homme-machine, afin de piloter le fonctionnement des tuners doubles et du démodulateur double de chaque voie d'acquisition en fonction des signaux à traiter reçus sur l'interface d'entrée de la voie.

La configuration du dispositif d'acquisition illustré sur la Fig. 5b, et la configuration et la composition de la voie d'acquisition illustrée sur la figure 5a procurent de multiples avantages qui sont similaires à ceux procurés par la configuration du dispositif d'acquisition illustré sur la Fig. 1, et la configuration et la composition de la voie d'acquisition illustrée sur la Fig. 2a, et exposés ci-dessus. Elles répondent par ailleurs aux problèmes techniques décrits dans les présentes, et peuvent pour ce faire avantageusement mettre en œuvre une ou plusieurs des solutions proposées pour la configuration du dispositif d'acquisition et de ses différents composants et modules, la composition et/ou la configuration des composants d'une voie d'acquisition, telles qu'exposées ci-dessus, notamment en lien avec les Figures 1, 2a, 3a, 3b, 3c, 3d, 3e, 4a, et 4e.

L'homme du métier pourra ainsi se rendre compte que le dispositif proposé n'est pas limité à un type particulier de voie d'acquisition, et que les solutions techniques et avantages décrits ci-dessus en lien avec les exemples non limitatifs de dispositif de la Fig. 1 et de voie d'acquisition de la Fig. 2a sont transposables à d'autres mises en œuvre du dispositif proposé avec d'autres types de voies d'acquisition, et notamment une ou plusieurs voies d'acquisition du type illustré et décrit en lien avec la fig. 5a, comme par exemple le dispositif de la Fig. 5b procurant 4 voies d'acquisition double pouvant être mises en œuvre sur une même carte électronique au format PCIe bas profil.

### Application industrielle

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et le dispositif pour la mise en œuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Dispositif d'acquisition de signaux de diffusion vidéo modulés analogiquement, le dispositif comprenant, regroupés sur une carte d'extension pour serveur informatique, un contrôleur, une pluralité de N voies d'acquisition, chacune des N voies d'acquisition produisant un flux de transport vidéo respectif fourni en entrée d'un module de virtualisation multi-canaux délivrant des trames portant des données d'un flux de transport vidéo respectif parmi les N flux de transports vidéo respectifs, dans lequel chacune des N voies d'acquisition comprend :
une interface d'entrée alimentée par un bloc d'alimentation faible bruit agencée pour recevoir un signal de diffusion vidéo modulé d'entrée respectif dans une bande de fréquences d'entrée ;
un amplificateur répartiteur radiofréquences faible bruit à entrée simple et double sorties agencé pour, sur la base du signal de diffusion vidéo modulé d'entrée respectif, produire un premier et un deuxième signal d'entrée amplifié dans la bande de fréquences d'entrée, dans lequel le premier signal d'entrée amplifié est dans une bande de fréquences de diffusion par satellite, et le deuxième signal d'entrée amplifié est dans une bande de fréquences de diffusion par câble et/ou terrestre ;
un premier tuner configuré pour recevoir le premier signal d'entrée amplifié et le transposer en fréquence depuis la bande de fréquences de diffusion par satellite pour générer un premier signal en bande de base ;
un deuxième tuner configuré pour recevoir le deuxième signal d'entrée amplifié et le transposer en fréquence depuis la bande de fréquences de diffusion terrestre et/ou par câble pour générer un deuxième signal en bande de base ; et
un démodulateur configuré pour recevoir en entrée le premier ou le deuxième signal en bande de base, et générer sur la base dudit signal en bande de base, le flux de transport vidéo respectif.

2. Dispositif selon la revendication 1, dans lequel l'interface d'entrée est coaxiale.

3. Dispositif selon l'une quelconque des revendications précédentes, dans lequel la carte d'extension pour serveur informatique est au format PCIe bas profil.

4. Dispositif selon l'une quelconque des revendications précédentes, dans lequel la bande de fréquences d'entrée couvre les bandes de fréquences de diffusion vidéo par câble, terrestre et par satellite.

5. Dispositif selon la revendication 4, dans lequel la bande de fréquences de diffusion par câble couvre les bandes de fréquences DVB-C et DVB-C2, la bande de fréquences de diffusion terrestre couvre les bandes de fréquences DVB-T et DVB-T2, et la bande de fréquences de diffusion par satellite couvre les bandes de fréquences DVB-S, DVB-S2 et DVB-S2X.

6. Dispositif selon l'une quelconque des revendications précédentes, dans lequel l' amplificateur répartiteur radiofréquences faible bruit est à entrée simple différentielle et à double sorties différentielles, dans lequel l'interface d'entrée comprend un point chaud et une masse, et dans lequel le point chaud de l'interface d'entrée est couplée électriquement à l'entrée plus de l'amplificateur répartiteur, et l'entrée moins de l'amplificateur répartiteur est couplée à la masse de l'interface d'entrée.

7. Dispositif selon la revendication 6, dans lequel les premier et deuxième tuners sont à entrée différentielle, et dans lequel une première sortie différentielle de l'amplificateur est couplée à l'entrée différentielle du premier tuner, et une deuxième sortie différentielle de l'amplificateur est couplée électriquement à l'entrée différentielle du deuxième tuner.

8. Dispositif selon l'une quelconque des revendications précédentes, dans lequel le premier tuner est à entrée simple et double sorties I/Q vers le démodulateur.

9. Dispositif selon l'une quelconque des revendications précédentes, dans lequel le premier, le deuxième tuner et l'amplificateur répartiteur sont chacun recouverts d'un blindage radiofréquences.

10. Dispositif selon l'une quelconque des revendications précédentes, dans lequel une ou plusieurs de la pluralité de N voies d'acquisition comprend un premier tuner double comprenant deux tuners chacun du type du premier tuner, un deuxième tuner double comprenant deux tuners chacun du type du deuxième tuner, et démodulateur double comprenant deux démodulateur du type du démodulateur et configuré pour recevoir en entrée les premier et deuxième signaux en bande de base, et générer sur la base des premier et deuxième signaux en bande de base un double flux de transport vidéo respectif fourni en entrée du module de virtualisation multi-canaux.

11. Dispositif selon la revendication 10, comportant 4 voies d'acquisition, chacune comprenant un premier tuner double respectif, un deuxième tuner double respectif, et un démodulateur double respectif, le dispositif étant configuré pour fournir au plus 8 flux de transports vidéo au module de virtualisation multi-canaux.
